# EUROPEAN PATENT SPECIFICATION

(11) **EP 2 940 959 B1**
(45) Date of publication and mention of the grant of the patent: **12.09.2018**
(21) Application number: 14768769.3
(22) Date of filing: 21.03.2014
(51) Int. Cl.: H04L 29/06, H04L 29/08, G06F 21/62, G06F 17/30

(54) **APPARATUSES AND SYSTEM FOR THE PRIVACY AND SECURITY OF USER FILES STORED AT A CLOUD SERVER**
VORRICHTUNGEN UND SYSTEM ZUM DATENSCHUTZ UND ZUR SICHERHEIT VON BENUTZERDATEIEN, DIE BEI EINEM CLOUD-SERVER GESPEICHERT WERDEN
DISPOSITIFS ET SYSTÈME POUR LA CONFIDENTIALITÉ ET LA SECURITÉ DE FICHIERS D´UTILISATEUR STOCKÉS DANS UN SERVEUR DE TYPE CLOUD

(30) Priority: 21.03.2013 CN 201310091474
(43) Date of publication of application: 04.11.2015
(73) Proprietor: Huawei Device (Dongguan) Co., Ltd., Dongguan, Guangdong 523808 (CN)
(72) Inventor: HUANG, Jiejing, Shenzhen Guangdong 518129 (CN); WANG, Chan, Shenzhen Guangdong 518129 (CN); WU, Huangwei, Shenzhen Guangdong 518129 (CN)
(74) Representative: Gill Jennings & Every LLP
(86) International application number: PCT/CN2014/073872
(87) International publication number: WO 2014/146607

(56) References cited:
- WO-A1-2012/167094
- CN-A- 102 024 054
- CN-A- 102 024 054
- CN-A- 102 075 542
- CN-A- 102 687 133
- US-A1- 2011 022 642
- US-A1- 2012 110 323

## Description

### TECHNICAL FIELD

The present invention relates to the field of network communications technologies, and in particular, to an information processing method and apparatus, an information retrieval method and apparatus, a user terminal, and a server.

### BACKGROUND

Cloud computing (Cloud Computing) is a technology that provides dynamically scalable virtual resources by using the Internet. A network may be conveniently accessed by using cloud computing, and storage and management of mass data may be implemented by configuring large quantities of storage devices.

Cloud computing generally requires much participation of a user. The user may upload his/her own file to a cloud server for saving. In this case, the file of the user may be open to outside users, and a third-party user may search a required file from the cloud server. Therefore, in order to protect privacy and security of user files, a user generally encrypts a file before uploading the file to a cloud server and uploads the encrypted file to the cloud server. In this case, because the file has been encrypted, a third-party user cannot obtain required information from the cloud server by means of retrieval, which makes it difficult to make full use of performance of the cloud server, thereby causing inconvenient information sharing on the Internet and low flexibility of file sharing between users.

US2011/022642 and CN102024054 both disclose information processing systems and methods.

### SUMMARY

Embodiments of the present invention provide an information processing method and apparatus, an information retrieval method and apparatus, a user terminal, and a server, so as to resolve a problem of inconvenient information sharing on the Internet and low flexibility of file sharing between users in the prior art because an encrypted file in a cloud server cannot be searched. The invention is defined in independent claims 1, 4, 6, and 9. To resolve the foregoing technical problem, the embodiments of the present invention disclose the following technical solutions:
According to a first aspect, an information processing method is provided, where the method includes:
generating privacy information and non-privacy information according to digest information of a file;
encrypting the file by using a shared key delivered by a trusted server, to obtain an encrypted file;
uploading the encrypted file and the non-privacy information to a cloud server;
receiving information, returned by the cloud server, about an address at which the encrypted file is saved; and
transmitting the address information of the encrypted file to the trusted server, so that the trusted server saves the address information.

With reference to the first aspect, in a first possible implementation manner of the first aspect, the method further includes:
transmitting the privacy information to the trusted server, so that the trusted server saves a correspondence between the privacy information and the address information.

With reference to the first aspect, in a second possible implementation manner of the first aspect, the encrypting the file by using a shared key delivered by a trusted server, to obtain an encrypted file is specifically: encrypting the file by using a first shared key delivered by the trusted server, to obtain the encrypted file; and
the method further includes: encrypting the privacy information by using a second shared key delivered by the trusted server, to obtain encrypted privacy information; and
uploading the encrypted privacy information to the cloud server.

According to a second aspect, an information processing method is provided, where the method includes:
obtaining an encrypted file and non-privacy information that are uploaded by a user terminal, where the encrypted file is the encrypted file obtained after the user terminal encrypts a file by using a shared key delivered by a trusted server, and the non-privacy information is the non-privacy information generated by the user terminal according to digest information of the file;
saving a correspondence between the encrypted file and the non-privacy information; and
delivering, to the user terminal, information about an address at which the encrypted file is saved, so that the trusted server saves the address information after the user terminal transmits the address information of the encrypted file to the trusted server.

With reference to the second aspect, in a first possible implementation manner of the second aspect, the encrypted file is specifically the encrypted file obtained after the user terminal encrypts the file by using a first shared key delivered by the trusted server; and
the method further includes:
obtaining encrypted privacy information uploaded by the user terminal, where the encrypted privacy information is the encrypted privacy information obtained after the user terminal encrypts privacy information by using a second shared key delivered by the trusted server, where the privacy information is the privacy information generated by the user terminal according to the digest information of the file.

According to a third aspect, an information processing method is provided, where the method includes:
delivering a shared key to a user terminal, so that the user terminal uploads, to a cloud server after obtaining an encrypted file by encrypting a file according to the shared key, the encrypted file and non-privacy information that is generated according to digest information of the file;
receiving address information, sent by the user terminal, of the encrypted file, where the address information is information, returned by the cloud server to the user terminal, about an address at which the encrypted file is saved; and
saving the address information.

With reference to the third aspect, in a first possible implementation manner of the third aspect, the method further includes:
receiving privacy information generated according to the digest information of the file and transmitted by the user terminal; and
saving a correspondence between the privacy information and the address information.

With reference to the third aspect, in a second possible implementation manner of the third aspect, the delivering a shared key to a user terminal, so that the user terminal encrypts a file according to the shared key to obtain an encrypted file is specifically: delivering a first shared key to the user terminal, so that the user terminal encrypts the file according to the first shared key to obtain the encrypted file; and
the method further includes: delivering a second shared key to the user terminal, so that the user terminal encrypts, according to the second shared key, privacy information that is generated according to the digest information of the file to obtain encrypted privacy information and uploads the encrypted privacy information to the cloud server.

According to a fourth aspect, an information retrieval method is provided, where the method includes:
receiving, by a first user terminal, information, sent by a second user terminal, about an address used to save an encrypted file of the second user terminal, where the address information is information, delivered to the second user terminal by the cloud server after the cloud server obtains the encrypted file and non-privacy information that are uploaded by the second user terminal, about an address at which the encrypted file is saved, where the encrypted file is an encrypted file obtained after the second user terminal encrypts a file according to a shared key delivered by a trusted server, and the non-privacy information is generated by the second user terminal according to digest information of the file;
acquiring, from the cloud server and the trusted server by the first user terminal, the non-privacy information, privacy information, and the shared key that correspond to the address information, where the privacy information is generated by the second user terminal according to the digest information of the file;
obtaining, by the first user terminal, address information of a to-be-accessed file by searching the privacy information and the non-privacy information;
acquiring, from the cloud server by the first user terminal, a first encrypted file corresponding to the address information of the to-be-accessed file; and decrypting, by the first user terminal, the first encrypted file by using the shared key, to obtain the to-be-accessed file.

With reference to the fourth aspect, in a first possible implementation manner of the fourth aspect, the acquiring, from the cloud server and the trusted server by the first user terminal, privacy information, the non-privacy information, and the shared key that correspond to the address information includes:
sending, to the trusted server by the first user terminal, the information about the address used to save the encrypted file of the second user terminal;
receiving, by the first user terminal, the privacy information and the shared key that correspond to the address information and are returned by the trusted server;
sending, to the cloud server by the first user terminal, the information about the address used to save the encrypted file of the second user terminal; and receiving, by the first user terminal, the non-privacy information that corresponds to the address information and is returned by the cloud server.

With reference to the fourth aspect, in a second possible implementation manner of the fourth aspect, the acquiring, from the cloud server and the trusted server by the first user terminal, privacy information, the non-privacy information, and the shared key that correspond to the address information includes:
sending, to the trusted server by the first user terminal, the information about the address used to save the encrypted file of the second user terminal;
receiving, by the first user terminal, a first shared key and a second shared key that correspond to the address information and are returned by the trusted server;
sending, to the cloud server by the first user terminal, the information about the address used to save the encrypted file of the second user terminal;
receiving, by the first user terminal, the non-privacy information and encrypted privacy information that correspond to the address information and are returned by the cloud server; and
decrypting, by the first user terminal, the encrypted privacy information by using the second shared key, to obtain the privacy information; and the decrypting, by the first user terminal, the first encrypted file by using the shared key, to obtain the to-be-accessed file is specifically: decrypting, by the first user terminal, the first encrypted file by using the first shared key, to obtain the to-be-accessed file.

With reference to the fourth aspect, or the first possible implementation manner of the fourth aspect, or the second possible implementation manner of the fourth aspect, in a third possible implementation manner of the fourth aspect, the obtaining, by the first user terminal, address information of a to-be-accessed file by searching the privacy information and the non-privacy information includes:
matching, by the first user terminal, privacy information and non-privacy information that correspond to each piece of address information with a retrieval condition;
obtaining, according to a matching result by the first user terminal, privacy information and non-privacy information that meet the retrieval condition; and determining, by the first user terminal, address information corresponding to the privacy information and the non-privacy information that meet the retrieval condition as the address information of the to-be-accessed file.

With reference to the fourth aspect, or the first possible implementation manner of the fourth aspect, or the second possible implementation manner of the fourth aspect, or the third possible implementation manner of the fourth aspect, in a fourth possible implementation manner of the fourth aspect, the acquiring, from the cloud server by the first user terminal, a first encrypted file corresponding to the address information of the to-be-accessed file includes:
sending, by the first user terminal, the address information of the to-be-accessed file to the cloud server; and
receiving, by the first user terminal, the first encrypted file that corresponds to the address information of the to-be-accessed file and is sent by the cloud server after the cloud server queries a saved correspondence between the address information and the encrypted file.

According to a fifth aspect, an information processing apparatus comprises:
a generating unit, configured to generate privacy information and non-privacy information according to digest information of a file;
an encrypting unit, configured to encrypt the file by using a shared key delivered by a trusted server, to obtain an encrypted file;
an uploading unit, configured to upload the encrypted file and the non-privacy information, separately to the privacy information, to a cloud server;
a receiving unit, configured to receive information, returned by the cloud server to the apparatus, about an address at which the encrypted file is saved; and a transmitting unit, configured to transmit the address information of the encrypted file to the trusted server, so that the trusted server saves the address information.

With reference to the fifth aspect, in a first possible implementation manner of the fifth aspect,
the transmitting unit is further configured to transmit the privacy information to the trusted server, so that the trusted server saves a correspondence between the privacy information and the address information.

With reference to the fifth aspect, in a second possible implementation manner of the fifth aspect,
the encrypting unit is specifically configured to encrypt the file by using a first shared key delivered by the trusted server, to obtain the encrypted file;
the encrypting unit is further configured to encrypt the privacy information by using a second shared key delivered by the trusted server, to obtain encrypted privacy information; and
the uploading unit is further configured to upload the encrypted privacy information to the cloud server.

According to a sixth aspect, an information processing apparatus is provided, where the apparatus includes:
an obtaining unit, configured to obtain an encrypted file and non-privacy information that are uploaded by a user terminal, where the encrypted file is the encrypted file obtained after the user terminal encrypts a file by using a shared key delivered by a trusted server, and the non-privacy information is the non-privacy information generated by the user terminal according to digest information of the file;
a saving unit, configured to save a correspondence between the encrypted file and the non-privacy information; and
a delivering unit, configured to deliver, to the user terminal, information about an address at which the encrypted file is saved, so that the trusted server saves the address information after the user terminal transmits the address information of the encrypted file to the trusted server.

With reference to the sixth aspect, in a first possible implementation manner of the sixth aspect,
the encrypted file acquired by the obtaining unit is specifically the encrypted file obtained after the user terminal encrypts the file by using a first shared key delivered by the trusted server; and
the obtaining unit is further configured to obtain encrypted privacy information uploaded by the user terminal, where the encrypted privacy information is the encrypted privacy information obtained after the user terminal encrypts privacy information by using a second shared key delivered by the trusted server, where the privacy information is the privacy information generated by the user terminal according to the digest information of the file.

According to a seventh aspect, an information processing apparatus is provided, where the apparatus includes:
a delivering unit, configured to deliver a shared key to a user terminal, so that the user terminal uploads, to a cloud server after obtaining an encrypted file by encrypting a file according to the shared key, the encrypted file and non-privacy information that is generated according to digest information of the file;
a receiving unit, configured to receive address information, sent by the user terminal, of the encrypted file, where the address information is information, returned by the cloud server to the user terminal, about an address at which the encrypted file is saved; and
a saving unit, configured to save the address information.

With reference to the seventh aspect, in a first possible implementation manner of the seventh aspect,
the receiving unit is further configured to receive privacy information that is generated according to the digest information of the file and transmitted by the user terminal; and
the saving unit is further configured to save a correspondence between the privacy information and the address information.

With reference to the seventh aspect, in a second possible implementation manner of the seventh aspect, the delivering unit is specifically configured to deliver a first shared key to the user terminal, so that the user terminal uploads, to the cloud server after obtaining the encrypted file by encrypting the file according to the first shared key, the encrypted file and the non-privacy information that is generated according to the digest information of the file; and
the delivering unit is further configured to deliver a second shared key to the user terminal, so that the user terminal encrypts, according to the second shared key, privacy information that is generated according to the digest information of the file to obtain encrypted privacy information and uploads the encrypted privacy information to the cloud server.

According to an eighth aspect, an information retrieval apparatus is provided, where the apparatus includes:
a receiving unit, configured to receive information, sent by a second user terminal, about an address used to save an encrypted file of the second user terminal, where the address information is information, delivered to the second user terminal by the cloud server after the cloud server obtains the encrypted file and non-privacy information that are uploaded by the second user terminal, separately to the privacy information, about an address at which the encrypted file is saved, where the encrypted file is an encrypted file obtained after the second user terminal encrypts a file according to a shared key delivered by a trusted server, and the non-privacy information is generated by the second user terminal according to digest information of the file;
an acquiring unit, configured to acquire, from the cloud server and the trusted server, the non-privacy information, privacy information, and the shared key that correspond to the address information, where the privacy information is generated by the second user terminal according to the digest information of the file;
a retrieving unit, configured to obtain address information of a to-be-accessed file by searching the privacy information and the non-privacy information, where the acquiring unit is further configured to acquire, from the cloud server, a first encrypted file corresponding to the address information of the to-be-accessed file; and
a decrypting unit, configured to decrypt the first encrypted file by using the shared key, to obtain the to-be-accessed file.

With reference to the eighth aspect, in a first possible implementation manner of the eighth aspect, the acquiring unit includes:
a first address sending subunit, configured to send, to the trusted server, the information about the address used to save the encrypted file of the second user terminal; and
a first information receiving subunit, configured to receive the privacy information and the shared key that correspond to the address information and are returned by the trusted server, where
the first address sending subunit is further configured to send, to the cloud server,
the information about the address used to save the encrypted file of the second user terminal; and
the first information receiving subunit is further configured to receive the non-privacy information that corresponds to the address information and is returned by the cloud server.

With reference to the eighth aspect, in a second possible implementation manner of the eighth aspect, the acquiring unit includes:
a second address sending subunit, configured to send, to the trusted server, the information about the address used to save the encrypted file of the second user terminal;
a second information receiving subunit, configured to receive a first shared key and a second shared key that correspond to the address information and are returned by the trusted server, where
the second address sending subunit is further configured to send, to the cloud server, the information about the address used to save the encrypted file of the second user terminal; and
the second information receiving subunit is further configured to receive the non-privacy information and encrypted privacy information that correspond to the address information and are returned by the cloud server; and a second information decrypting subunit, configured to decrypt the encrypted privacy information by using the second shared key, to obtain the privacy information, where
the decrypting unit is specifically configured to decrypt the first encrypted file by using the first shared key, to obtain the to-be-accessed file.

With reference to the eighth aspect, or the first possible implementation manner of the eighth aspect, or the second possible implementation manner of the eighth aspect, in a third possible implementation manner of the eighth aspect, the retrieving unit includes:
an information matching subunit, configured to match privacy information and non-privacy information that correspond to each piece of address information with a retrieval condition;
a result obtaining subunit, configured to obtain, according to a matching result, privacy information and non-privacy information that meet the retrieval condition; and
an address determining subunit, configured to determine address information corresponding to the privacy information and the non-privacy information that meet the retrieval condition as the address information of the to-be-accessed file.

With reference to the eighth aspect, or the first possible implementation manner of the eighth aspect, or the second possible implementation manner of the eighth aspect, or the third possible implementation manner of the eighth aspect, in a fourth possible implementation manner of the eighth aspect, the acquiring unit includes:
a third address sending subunit, configured to send the address information of the to-be-accessed file to the cloud server; and
a third file receiving subunit, configured to receive the first encrypted file that corresponds to the address information of the to-be-accessed file and is sent by the cloud server after the cloud server queries a saved correspondence between the address information and the encrypted file.

According to a ninth aspect, a user terminal is provided, where the user terminal includes a bus, and a network interface, a processor, and a memory that are connected by using the bus, where
the network interface is configured to form a network connection with a trusted server and a cloud server;
the processor is configured to: generate privacy information and non-privacy information according to digest information of a file; encrypt the file by using a shared key delivered by the trusted server, to obtain an encrypted file; through the network interface, upload the encrypted file and the non-privacy information to the cloud server and receive information, returned by the cloud server, about an address at which the encrypted file is saved; and transmit the address information of the encrypted file to the trusted server through the network interface, so that the trusted server saves the address information; and
the memory is configured to save the address information of the encrypted file.

With reference to the ninth aspect, in a first possible implementation manner of the ninth aspect,
the processor is further configured to transmit the privacy information to the trusted server through the network interface, so that the trusted server saves a correspondence between the privacy information and the address information.

With reference to the ninth aspect, in a second possible implementation manner of the ninth aspect,
the processor is further configured to: encrypt the file by using a first shared key delivered by the trusted server, to obtain the encrypted file; and encrypt the privacy information by using a second shared key delivered by the trusted server, to obtain encrypted privacy information; and upload the encrypted privacy information to the cloud server through the network interface.

According to a tenth aspect, a cloud server is provided, where the cloud server includes a bus, and a network interface, a processor, and a memory that are connected by using the bus, where
the network interface is configured to form a network connection with a user terminal;
the processor is configured to obtain, through the network interface, an encrypted file and non-privacy information that are uploaded by the user terminal, where the encrypted file is the encrypted file obtained after the user terminal encrypts a file by using a shared key delivered by a trusted server, and the non-privacy information is the non-privacy information generated by the user terminal according to digest information of the file;
the memory is configured to save a correspondence between the encrypted file and the non-privacy information; and
the processor is further configured to deliver, to the user terminal through the network interface, information about an address at which the encrypted file is saved, so that the trusted server saves the address information after the user terminal transmits the address information of the encrypted file to the trusted server.

With reference to the tenth aspect, in a first possible implementation manner of the tenth aspect,
the encrypted file obtained by the processor through the network interface and uploaded by the user terminal is specifically the encrypted file obtained after the user terminal encrypts the file by using a first shared key delivered by the trusted server; and
the processor is further configured to obtain, through the network interface, encrypted privacy information uploaded by the user terminal, where the encrypted privacy information is the encrypted privacy information obtained after the user terminal encrypts privacy information by using a second shared key delivered by the trusted server, where the privacy information is the privacy information generated by the user terminal according to the digest information of the file.

According to an eleventh aspect, a trusted server is provided, where the trusted server includes a bus, and a network interface, a processor, and a memory that are connected by using the bus, where
the network interface is configured to form a network connection with a user terminal;
the processor is configured to: deliver a shared key to the user terminal through the network interface, so that the user terminal uploads, to a cloud server after obtaining an encrypted file by encrypting a file according to the shared key, the encrypted file and non-privacy information that is generated according to digest information of the file; and receive, through the network interface, address information, sent by the user terminal, of the encrypted file, where the address information is information, returned by the cloud server to the user terminal, about an address at which the encrypted file is saved; and
the memory is configured to save the address information.

With reference to the eleventh aspect, in a first possible implementation manner of the eleventh aspect,
the processor is further configured to receive, through the network interface, privacy information generated according to the digest information of the file and transmitted by the user terminal; and
the memory is further configured to save a correspondence between the privacy information and the address information.

With reference to the eleventh aspect, in a second possible implementation manner of the eleventh aspect,
the processor is specifically configured to deliver a first shared key to the user terminal through the network interface, so that the user terminal uploads, to the cloud server after obtaining the encrypted file by encrypting the file according to the first shared key, the encrypted file and the non-privacy information that is generated according to the digest information of the file; and
the processor is further configured to deliver a second shared key to the user terminal through the network interface, so that the user terminal encrypts, according to the second shared key, privacy information that is generated according to the digest information of the file to obtain encrypted privacy information and uploads the encrypted privacy information to the cloud server.

According to a twelfth aspect, a user terminal is provided, where the user terminal is used as a first user terminal, including a bus, and a network interface and a processor that are connected by using the bus, where
the network interface is configured to form a network connection with a second user terminal, a cloud server, and a trusted server; and
the processor is configured to: receive information, sent by the second user terminal, about an address used to save an encrypted file of the second user terminal, where the address information is information, delivered to the second user terminal by the cloud server after the cloud server obtains the encrypted file and non-privacy information that are uploaded by the second user terminal, about an address at which the encrypted file is saved, where the encrypted file is an encrypted file obtained after the second user terminal encrypts a file according to a shared key delivered by the trusted server, and the non-privacy information is generated by the second user terminal according to digest information of the file; acquire, from the cloud server and the trusted server through the network interface, the non-privacy information, privacy information, and the shared key that correspond to the address information, where the privacy information is generated by the second user terminal according to the digest information of the file; obtain address information of a to-be-accessed file by searching the privacy information and the non-privacy information; acquire, from the cloud server through the network interface, a first encrypted file corresponding to the address information of the to-be-accessed file; and decrypt the first encrypted file by using the shared key, to obtain the to-be-accessed file.

With reference to the twelfth aspect, in a first possible implementation manner of the twelfth aspect,
the processor is specifically configured to: through the network interface, send, to the trusted server, the information about the address used to save the encrypted file of the second user terminal, and receive the privacy information and the shared key that correspond to the address information and are returned by the trusted server; and through the network interface, send, to the cloud server, the information about the address used to save the encrypted file of the second user terminal, and receive the non-privacy information that corresponds to the address information and is returned by the cloud server.

With reference to the twelfth aspect, in a second possible implementation manner of the twelfth aspect,
the processor is specifically configured to: through the network interface, send, to the trusted server, the information about the address used to save the encrypted file of the second user terminal; receive a first shared key and a second shared key that correspond to the address information and are returned by the trusted server; send, to the cloud server, the information about the address used to save the encrypted file of the second user terminal; receive the non-privacy information and encrypted privacy information that correspond to the address information and are returned by the cloud server; and decrypt the encrypted privacy information by using the second shared key, to obtain the privacy information, and decrypt the first encrypted file by using the first shared key, to obtain the to-be-accessed file.

With reference to the twelfth aspect, or the first possible implementation manner of the twelfth aspect, or the second possible implementation manner of the twelfth aspect, in a third possible implementation manner of the twelfth aspect,
the processor is specifically configured to: separately match privacy information and non-privacy information that correspond to each piece of address information with a retrieval condition; obtain, according to a matching result, privacy information and non-privacy information that meet the retrieval condition; and determine address information corresponding to the privacy information and the non-privacy information that meet the retrieval condition as the address information of the to-be-accessed file.

With reference to the twelfth aspect, or the first possible implementation manner of the twelfth aspect, or the second possible implementation manner of the twelfth aspect, or the third possible implementation manner of the twelfth aspect, in a fourth possible implementation manner of the twelfth aspect,
the processor is specifically configured to, through the network interface, send the address information of the to-be-accessed file to the cloud server and receive the first encrypted file that corresponds to the address information of the to-be-accessed file and is sent by the cloud server after the cloud server queries a saved correspondence between the address information and the encrypted file.

In the embodiments of the present invention, during information processing, a user terminal generates privacy information and non-privacy information according to digest information of a file; encrypts the file by using a shared key delivered by a trusted server, to obtain an encrypted file; uploads the encrypted file and the non-privacy information to a cloud server; receives information, returned by the cloud server, about an address at which the encrypted file is saved; and transmits the address information of the encrypted file to the trusted server, so that the trusted server saves the address information of the encrypted file. By applying the embodiments of the present invention, a cloud server saves an encrypted file and non-privacy information, and a trusted server saves address information of the encrypted file. Therefore, no third-party user terminal can directly obtain privacy information from the cloud server, but only a trusted third-party user terminal can obtain the address information of the encrypted file from the trusted server and access the privacy information according to the address information, so that the trusted third-party user terminal can search the privacy information and the non-privacy information, which enables the trusted third-party user terminal to access the encrypted file while ensuring security of the user file. During information retrieval, a first user terminal receives information, sent by a second user terminal, about an address used to save an encrypted file of the second user terminal; acquires, from a cloud server and a trusted server, privacy information, non-privacy information, and a shared key that correspond to the address information; obtains address information of a to-be-accessed file by searching the privacy information and the non-privacy information; acquires, from the cloud server, a first encrypted file corresponding to the address information of the to-be-accessed file; and decrypts the first encrypted file by using the shared key, to obtain the to-be-accessed file. By applying the embodiments of the present invention, a trusted server is introduced in an information retrieval process, so that an encrypted file uploaded to a cloud server by a user terminal can be searched by a trusted third-party user terminal. The trusted third-party user terminal may obtain required information from the cloud server by means of retrieval. Therefore, while security of a user file is ensured, performance of the cloud server can be made full use of, and convenience of information sharing on the Internet and flexibility of file sharing between users using the cloud server are improved.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, a person of ordinary skill in the art may still derive other drawings from these accompanying drawings without creative efforts.
FIG. 1A is a flowchart of an information processing method according to one embodiment of the present invention;
FIG. 1B is a flowchart of an information processing method according to another embodiment of the present invention;
FIG. 1C is a flowchart of an information processing method according to still another embodiment of the present invention;
FIG. 2 is a flowchart of an information retrieval method according to one embodiment of the present invention;
FIG. 3 is a flowchart of an information processing method according to yet another embodiment of the present invention;
FIG. 4 is a flowchart of an information retrieval method according to another embodiment of the present invention;
FIG. 5 is a flowchart of an information processing method according to still yet another embodiment of the present invention;
FIG. 6A and FIG. 6B are flowcharts of an information retrieval method according to still another embodiment of the present invention;
FIG. 7 is a block diagram of an information processing apparatus according to one embodiment of the present invention;
FIG. 8 is a block diagram of an information processing apparatus according to another embodiment of the present invention;
FIG. 9 is a block diagram of an information processing apparatus according to still another embodiment of the present invention;
FIG. 10 is a block diagram of an information retrieval apparatus according to one embodiment of the present invention;
FIG. 11 is a block diagram of a user terminal according to one embodiment of the present invention;
FIG. 12 is a block diagram of a cloud server according to an embodiment of the present invention;
FIG. 13 is a block diagram of a trusted server according to an embodiment of the present invention; and
FIG. 14 is a block diagram of a user terminal according to another embodiment of the present invention.

### DESCRIPTION OF EMBODIMENTS

The following embodiments of the present invention provide an information processing method and apparatus, an information retrieval method and apparatus, a user terminal, and a server.

To make a person skilled in the art understand the technical solutions in the embodiments of the present invention better, and make the objectives, features, and advantages of the embodiments of the present invention clearer, the following further describes in detail the technical solutions in the embodiments of the present invention with reference to the accompanying drawings.

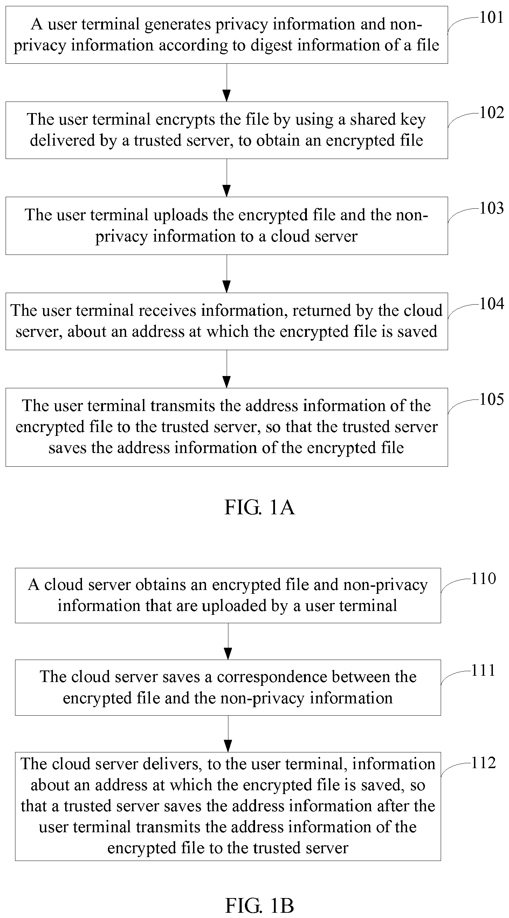

Referring to FIG. 1A, FIG. 1A is a flowchart of an information processing method according to one embodiment of the present invention. This embodiment describes an information processing process from a user terminal side.

Step 101: A user terminal generates privacy information and non-privacy information according to digest information of a file.

The file in this embodiment of the present invention refers to a user file to be uploaded to a cloud server for saving. A type of the file may specifically be a multimedia file or a structured file, where the multimedia file may include a photo, a picture, a video, and the like; and the structured file may include a WORD document, an Extensible Markup Language (Extensible Markup Language, XML) file, and the like.

A file is formed by file content and digest information. The digest information refers to an attribute description of the file, for example, a simple attribute description on the file by a user, and a description and gist, in a form of concise texts, of the file. A photo file is used as an example. Digest information of the photo file may include one or more of the following: a person (persons) in the photo, a photo theme, a scenario in the photo, photographing time, a photographing place, a camera parameter, a pixel size, and the like. Further, the digest information may be divided into two parts: privacy information and non-privacy information. The privacy information refers to some sensitive personal information characterized by confidentiality. For a photo, for example, privacy information may include a person (persons) in the photo, a photographing place, and the like. The non-privacy information is usually not characterized by confidentiality, and therefore may be open to outside users. For a photo, for example, non-privacy information may include photographing time, a pixel size, a camera parameter, and the like.

In this embodiment of the present invention, a crawler technology, an automatic digest technology, a face recognition technology, and the like in the prior art may be used to extract the digest information from the file, and details are not described herein again. The amount of information included in the digest information may be adjusted according to an actual need, which is not limited in this embodiment of the present invention. A key in this embodiment of the present invention is to distinguish between the privacy information and the non-privacy information in the digest information, so as to ensure security of user information.

Step 102: The user terminal encrypts the file by using a shared key delivered by a trusted server, to obtain an encrypted file.

In this embodiment of the present invention, the trusted server may specifically be a server in a trusted center. The trusted center is deployed between a cloud server and a user terminal. The trusted center may issue in advance a certificate to a cloud server and a user terminal that exchange information by using the trusted server, so as to implement identity authentication between the cloud server and the user terminal, that is, the trusted center may have a certificate authority (Certificate Authority, CA) center. Moreover, the trusted center may also deliver a key to the user terminal, that is, the trusted center may further have a key distribution center (Key Distribution Center, KDC).

Step 103: The user terminal uploads the encrypted file and the non-privacy information to a cloud server.

Step 104: The user terminal receives information, returned by the cloud server, about an address at which the encrypted file is saved.

In this embodiment, after receiving the encrypted file uploaded by the user terminal, the cloud server needs to save the encrypted file and send, to the user terminal, the information about an address at which the encrypted file is saved, so that the user terminal may access, according to the address information, the file saved in the cloud server. Generally, the address information may refer to a uniform resource locator (Uniform Universal Resource Locator, URL).

Step 105: The user terminal transmits the address information of the encrypted file to the trusted server, so that the trusted server saves the address information of the encrypted file.

With reference to the foregoing embodiment, in one specific implementation manner, while transmitting the address information of the encrypted file to the trusted server, the user terminal may further transmit the privacy information that is generated according to the digest information of the file, so that the trusted server saves a correspondence between the privacy information and the address information.

With reference to the foregoing embodiment, in another specific implementation manner, the user terminal may encrypt the file by using a first shared key delivered by the trusted server, to obtain the encrypted file; and the user terminal may encrypt the privacy information by using a second shared key delivered by the trusted server, to obtain encrypted privacy information and upload the encrypted privacy information while uploading the encrypted file and the non-privacy information to the cloud server.

Referring to FIG. 1B, FIG. 1B is a flowchart of an information processing method according to another embodiment of the present invention. This embodiment describes an information processing process from a cloud server side.

Step 110: A cloud server obtains an encrypted file and non-privacy information that are uploaded by a user terminal.

The encrypted file is an encrypted file obtained after the user terminal encrypts a file by using a shared key delivered by a trusted server, and the non-privacy information is non-privacy information generated by the user terminal according to digest information of the file.

Step 111: The cloud server saves a correspondence between the encrypted file and the non-privacy information.

Step 112: The cloud server delivers, to the user terminal, information about an address at which the encrypted file is saved, so that the trusted server saves the address information after the user terminal transmits the address information of the encrypted file to the trusted server. In one specific implementation manner, the encrypted file may specifically be an encrypted file obtained after the user terminal encrypts the file by using a first shared key delivered by the trusted server. While obtaining the encrypted file and the non-privacy information that are uploaded by the user terminal, the cloud server may obtain encrypted privacy information uploaded by the user terminal. The encrypted privacy information may be encrypted privacy information obtained after the user terminal encrypts privacy information by using a second shared key delivered by the trusted server, where the privacy information is privacy information generated by the user terminal according to the digest information of the file. The first shared key and the second shared key may be the same or may be different, which is not limited in this embodiment of the present invention.

It should be noted that the foregoing information processing embodiment described from the cloud server side shown in FIG. 1B is an embodiment corresponding to the information processing embodiment described from the user terminal side shown in FIG. 1A. Therefore, for a specific information processing process and a relevant description, reference may be made to the aforementioned embodiment shown in FIG. 1A, and details are not described herein again.

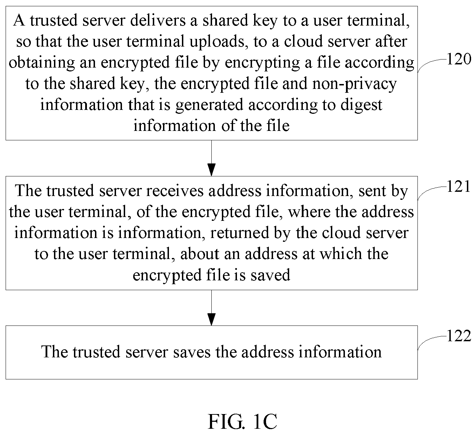

Referring to FIG. 1C, FIG. 1C is a flowchart of an information processing method according to another embodiment of the present invention. This embodiment describes an information processing process from a trusted server side.

Step 120: A trusted server delivers a shared key to a user terminal, so that the user terminal uploads, to a cloud server after obtaining an encrypted file by encrypting a file according to the shared key, the encrypted file and non-privacy information that is generated according to digest information of the file.

In one specific implementation manner, the trusted server may deliver a first shared key and a second shared key to the user terminal. The first shared key is used by the user terminal to encrypt the file to obtain the encrypted file. The second shared key is used by the terminal to encrypt privacy information that is generated according to the digest information of the file, to obtain encrypted privacy information that is to be uploaded to the cloud server.

Step 121: The trusted server receives address information, sent by the user terminal, of the encrypted file, where the address information is information, returned by the cloud server to the user terminal, about an address at which the encrypted file is saved.

Step 122: The trusted server saves the address information.

In one specific implementation manner, the trusted server may further receive the privacy information generated according to the digest information of the file and transmitted by the user terminal, and save a correspondence between the privacy information and the address information.

It should be noted that the foregoing information processing embodiment described from the cloud server side shown in FIG. 1C is an embodiment corresponding to the information processing embodiment described from the user terminal side shown in FIG. 1A and the information processing embodiment described from the cloud server side shown in FIG. 1B. Therefore, for a specific information processing process and a relevant description, reference may be made to the aforementioned embodiments shown in FIG. 1A and FIG. IB, and details are not described herein again.

It may be seen from the foregoing embodiments shown in FIG. 1A to FIG. 1C that: A cloud server saves an encrypted file and non-privacy information, and a trusted server saves address information of the encrypted file; therefore, no third-party user terminal can directly obtain privacy information from the cloud server, but only a trusted third-party user terminal can obtain the address information of the encrypted file from the trusted server and access the privacy information according to the address information, so that the trusted third-party user terminal can search the privacy information and the non-privacy information, which enables the trusted third-party user terminal to access the encrypted file while ensuring security of the user file.

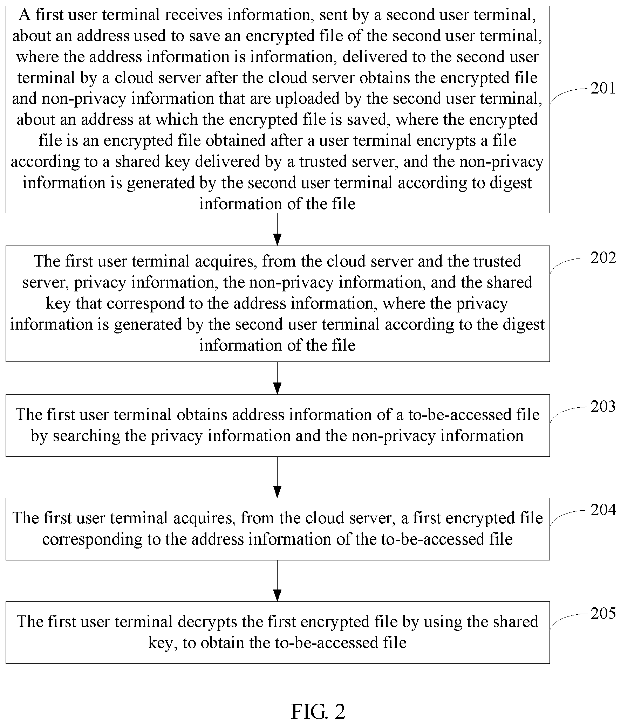

Referring to FIG. 2, FIG. 2 is a flowchart of an information retrieval method according to one embodiment of the present invention. This embodiment describes an information retrieval process from a user terminal side. In this embodiment, information saved in the aforementioned cloud server and that saved in an information server are used for information retrieval.

Step 201: A first user terminal receives information, sent by a second user terminal, about an address used to save an encrypted file of the second user terminal, where the address information is information, delivered to the second user terminal by a cloud server after the cloud server obtains the encrypted file and non-privacy information that are uploaded by the second user terminal, about an address at which the encrypted file is saved, where the encrypted file is an encrypted file obtained after a user terminal encrypts a file according to a shared key delivered by a trusted server, and the non-privacy information is generated by the second user terminal according to digest information of the file.

In this embodiment, it is assumed that the second user terminal is the user terminal that performs information processing and uploads the encrypted file to the cloud server according to the aforementioned embodiment shown in FIG. 1A. A user of the second user terminal grants a user of the first user terminal permission to search and access a file that is uploaded to the cloud server by the second terminal. Therefore, the second user terminal can send, to the first user terminal, the information about the address used to save the encrypted file of the second user terminal.

The second user terminal generally uploads multiple files and an encrypted file corresponding to each file has corresponding address information in the cloud server. Therefore, in this embodiment, the address information that is sent to the first user terminal by the second user terminal may be multiple pieces of address information corresponding to multiple encrypted files.

Step 202: The first user terminal acquires, from the cloud server and the trusted server, privacy information, the non-privacy information, and the shared key that correspond to the address information, where the privacy information is generated by the second user terminal according to the digest information of the file.

In this embodiment, because the first user terminal is an authorized user terminal of the second user terminal, the first user terminal may perform authentication with the trusted server before accessing the encrypted file, which is saved in the cloud server, of the second user terminal. A specific authentication manner may be user-certificate-based authentication, or one-factor-based network authentication, or two-factor-based network authentication, or multi-factor-based network authentication, which is not limited in this embodiment of the present invention. An authentication process may be initiated by the first user terminal or may be initiated by the trusted server, which is not limited in this embodiment of the present invention.

In one specific implementation manner, when the trusted server saves privacy information and the cloud server saves an encrypted file and non-privacy information, the first user terminal may send, to the trusted server, the information about the address used to save the encrypted file of the second user terminal and receives the privacy information and the shared key that correspond to the address information and are returned by the trusted server; and the first user terminal sends, to the cloud server, the information about the address used to save the encrypted file of the second user terminal and receives the non-privacy information that corresponds to the address information and is returned by the cloud server.

In another specific implementation manner, when the cloud server saves an encrypted file, encrypted privacy information, and non-privacy information, the first user terminal may send, to the trusted server, the information about the address used to save the encrypted file of the second user terminal and receives a first shared key and a second shared key that correspond to the address information and are returned by the trusted server; and the first user terminal sends, to the cloud server, the information about the address used to save the encrypted file of the second user terminal, receives the non-privacy information and the encrypted privacy information that correspond to the address information and are returned by the cloud server, and decrypts the encrypted privacy information by using the second shared key, to obtain the privacy information.

Step 203: The first user terminal obtains address information of a to-be-accessed file by searching the privacy information and the non-privacy information.

Optionally, the first user terminal may separately match privacy information and non-privacy information that correspond to each piece of address information with a retrieval condition, obtain, according to a matching result, privacy information and non-privacy information that meet the retrieval condition, and determine address information corresponding to the privacy information and the non-privacy information that meet the retrieval condition as the address information of the to-be-accessed file.

In one specific retrieval manner, the first user terminal may first use the non-privacy information to match a first retrieval condition, and the cloud server returns a first retrieval result, where the first retrieval result includes non-privacy information meeting the first retrieval condition and corresponding privacy information; and then the first user terminal uses the corresponding privacy information to match a second retrieval condition, and a second retrieval result is returned, where the second retrieval result includes privacy information meeting the second retrieval condition and corresponding non-privacy information. That is, the retrieval condition is decomposed into the first retrieval condition corresponding to the non-privacy information and the second retrieval condition corresponding to the privacy information, and the non-privacy information and the privacy information are matched respectively in two times of matching. It should be noted that, in an actual matching process, privacy information may be first matched and then non-privacy information is matched, or non-privacy information and privacy information may be matched at the same time, which is not limited in this embodiment of the present invention.

Step 204: The first user terminal acquires, from the cloud server, a first encrypted file corresponding to the address information of the to-be-accessed file.

Specifically, the first user terminal may send the address information of the to-be-accessed file to the cloud server. After querying a saved correspondence between the address information and the encrypted file, the cloud server obtains the first encrypted file corresponding to the address information of the to-be-accessed file and sends the first encrypted file to the first user terminal.

Step 205: The first user terminal decrypts the first encrypted file by using the shared key, to obtain the to-be-accessed file.

In step 202, when the trusted server returns a first shared key and a second shared key that correspond to the address information, the first user terminal may decrypt the first encrypted file by using the first shared key, to obtain the to-be-accessed file.

To further describe a relationship between files involved in the foregoing embodiment, an example is described as follows: it is assumed that the second user terminal has a total of N (N is a natural number) files, and that the N files are encrypted to obtain N encrypted files of the second user terminal, where the to-be-accessed file is at least one file meeting a retrieval condition in the aforementioned N files, and a file obtained after the at least one file is encrypted is the first encrypted file.

It may be seen from the foregoing embodiment that, in this embodiment of the present invention, a trusted server is introduced in an information retrieval process, so that an encrypted file uploaded to a cloud server by a user terminal can be searched by a trusted third-party user terminal. The trusted third-party user terminal may obtain required information from the cloud server by means of retrieval. Therefore, while security of a user file is ensured, performance of the cloud server can be made full use of, and convenience of information sharing on the Internet and flexibility of file sharing between users using the cloud server are improved.

With reference to interaction among a user terminal, a cloud server, and a trusted server, the following details information processing processes and information retrieval processes in the embodiments of the present invention.

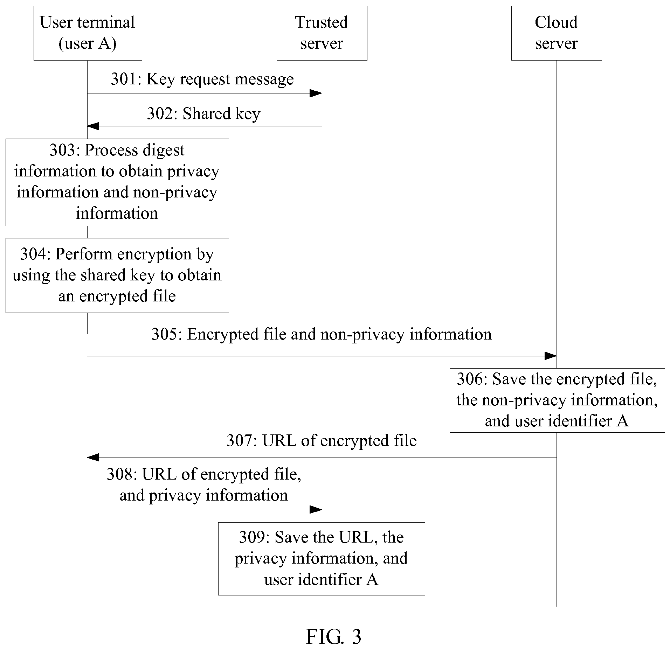

Referring to FIG. 3, FIG. 3 is a flowchart of an information processing method according to another embodiment of the present invention.

Step 301: A user terminal of user A sends a key request message to a trusted server.

Step 302: The trusted server returns a shared key to the user terminal according to the key request message.

The trusted server may be configured to deliver shared keys to different user terminals. Therefore, after a shared key is delivered to each user terminal, a correspondence between a user identifier and the shared key may be saved.

Step 303: The user terminal extracts, from a to-be-uploaded file, digest information of the file and divides the digest information into privacy information and non-privacy information. Step 304: The user terminal encrypts the to-be-uploaded file by using the shared key, to obtain an encrypted file.

In this embodiment of the present invention, when the to-be-uploaded file is encrypted by using the shared key, all types of existing encryption algorithms may be used, for example, the Advanced Encryption Standard (Advanced Encryption Standard, AES) algorithm.

Step 305: The user terminal uploads the encrypted file and the non-privacy information of the file to a cloud server.

Step 306: The cloud server saves a correspondence among the received encrypted file, non-privacy information, and a user identifier.

Step 307: The cloud server returns, to the user terminal of user A, a URL at which the encrypted file is saved.

Step 308: The user terminal transmits the URL at which the encrypted file is saved and the privacy information to the trusted server.

Step 309: The trusted server saves a correspondence among the received URL, privacy information, and user identifier A.

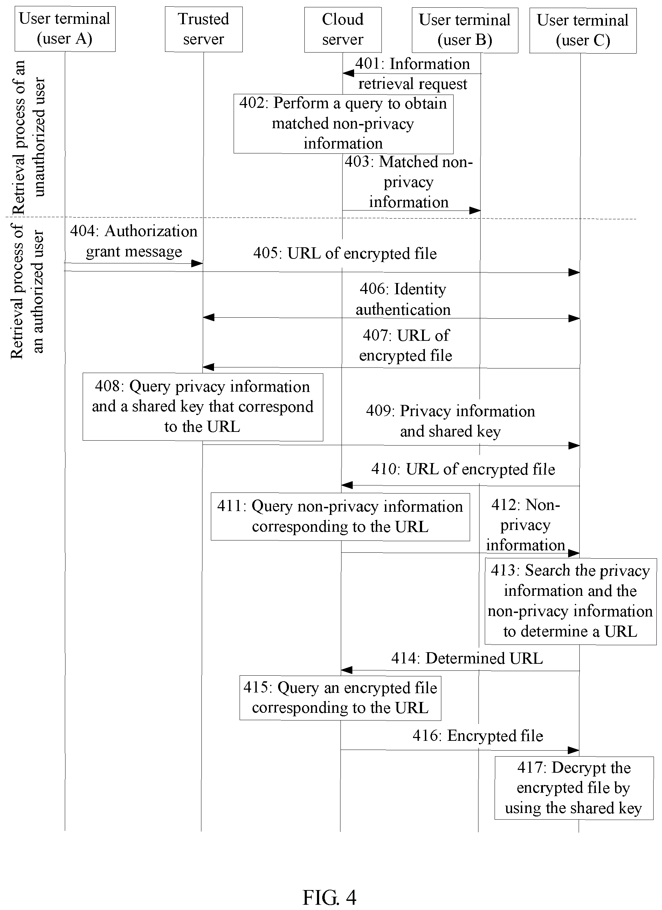

Referring to FIG. 4, FIG. 4 is a flowchart of an information retrieval method according to another embodiment of the present invention. Based on the information obtained in the information processing embodiment shown in FIG. 3, this embodiment separately implements an information retrieval process of an unauthorized user and an information retrieval process of an authorized user.

The following steps 401 to 403 describe an information retrieval process of an unauthorized user:
Step 401: Unauthorized user B sends an information retrieval request to a cloud server by using a user terminal.

The information retrieval request may include a retrieval condition that is used for information matching.

Step 402: The cloud server queries saved non-privacy information of users according to the information retrieval request.

Step 403: The cloud server returns non-privacy information meeting the information retrieval request to the user terminal of user B.

In this embodiment of the present invention, because an unauthorized user may search only non-privacy information, saved in the cloud server, of a user, some retrieval services may be provided while security and privacy of a user file are ensured.

The following steps 404 to 417 describe an information retrieval process of an authorized user:
Step 404: A user terminal of user A sends an authorization grant message to a trusted server, where the authorization grant message grants user C permission to access an encrypted file, stored in a cloud server, of user A.
Step 405: The user terminal of user A sends a URL of the encrypted file to a user terminal of user C.
Step 406: The user terminal of user C completes identity authentication with the trusted server by using a certificate of user C.

In addition to the user-certificate-based authentication manner, one-factor-based network authentication, or two-factor-based network authentication, or multi-factor-based network authentication may also be used, which is not limited in this embodiment of the present invention.

Step 407: The user terminal of user C sends, to the trusted server, the URL at which the encrypted file is saved.

It should be noted that, optionally, in the aforementioned step 405, the user terminal of user A may not send the URL of the encrypted file to the user terminal of user C, but the trusted server actively sends, after identity authentication between the user terminal of user C and the trusted server is complete, the URL of the encrypted file of the user terminal of user A to the user terminal of user C. The user terminal of user C may have obtained authorization from multiple users. Therefore, when having a need to search a file of the user terminal of user A, the user terminal of user C may send a saved URL of the encrypted file of the user terminal of user A to the trusted server.

Step 408: The trusted server queries a saved correspondence according to the received URL to obtain privacy information and a shared key that correspond to the URL.

Step 409: The trusted server returns, to the user terminal of user C, the privacy information and the shared key that correspond to the URL.

Step 410: The user terminal of user C sends, to the cloud server, the URL at which the encrypted file is saved.

Step 411: The cloud server queries a saved correspondence according to the received URL to obtain non-privacy information corresponding to the URL.

Step 412: The cloud server returns, to the user terminal of user C, the non-privacy information corresponding to the URL.

Step 413: The user terminal of user C searches the privacy information and the non-privacy information to obtain a URL corresponding to privacy information and non-privacy information that meet a retrieval condition.

In this embodiment, the URL is information about an address used to save the encrypted file of user A. Because each URL corresponds to one encrypted file, accordingly, each URL may correspond to privacy information, non-privacy information, and a shared key of a saved encrypted file at the same time. Therefore, the user terminal of user C may save a correspondence among privacy information, a shared key, and non-privacy information of each encrypted file by using each URL as a keyword.

During retrieval, retrieval is performed according to digest information formed by privacy information and non-privacy information that correspond to a same URL. After digest information meeting a retrieval condition is obtained, a URL corresponding to the digest information is obtained according to a saved correspondence.

In one specific retrieval manner, the user terminal of user C may first use the non-privacy information in the digest information to match a first retrieval condition, and the cloud server returns a first retrieval result, where the first retrieval result includes digest information formed by non-privacy information meeting the first retrieval condition and corresponding privacy information; and then the user terminal of user C uses the privacy information in the digest information in the first retrieval result to match a second retrieval condition, and a second retrieval result is returned, where the second retrieval result includes digest information formed by privacy information and non-privacy information that meet the second retrieval condition. It should be noted that, in an actual matching process, privacy information may also be first matched and then non-privacy information is matched, or non-privacy information and privacy information may be matched at the same time, which is not limited in this embodiment.

Step 414: The user terminal of user C sends the obtained URL to the cloud server.

Step 415: The cloud server queries a correspondence according to the received URL to obtain an encrypted file corresponding to the URL.

Step 416: The cloud server returns the found encrypted file to the user terminal of user C. Step 417: The user terminal of user C decrypts the encrypted file according to the shared key of the encrypted file.

The user terminal of user C obtains, according to the saved correspondence in step 413, a shared key corresponding to the URL meeting the retrieval condition, and decrypts the received encrypted file by using the shared key.

It may be seen from the foregoing embodiment that a trusted server is introduced in an information retrieval process, so that an encrypted file uploaded to a cloud server by a user terminal can be searched by a trusted third-party user terminal. The trusted third-party user terminal may obtain required information from the cloud server by means of retrieval. Therefore, while security of a user file is ensured, performance of the cloud server can be made full use of, and convenience of information sharing on the Internet and flexibility of file sharing between users using the cloud server are improved.

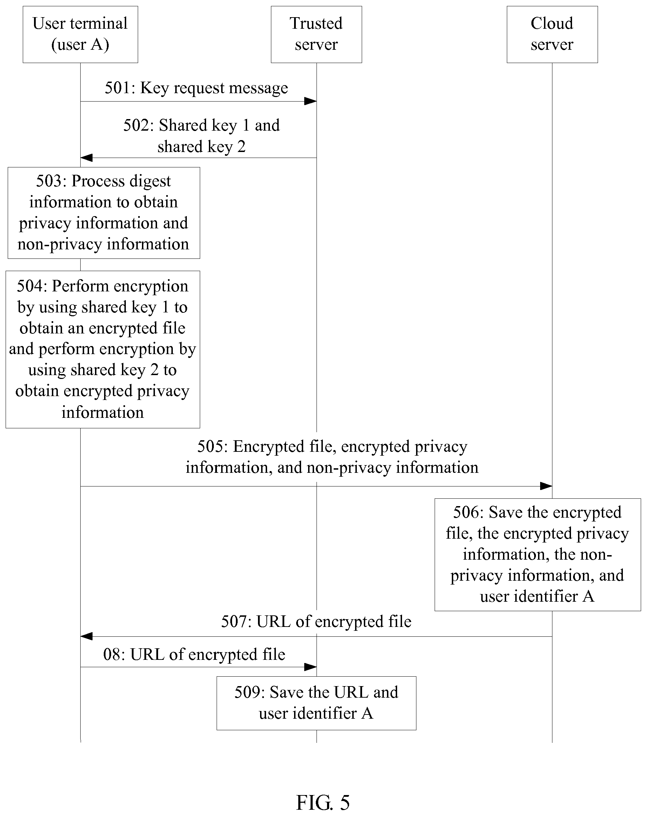

Referring to FIG. 5, FIG. 5 is a flowchart of an information processing method according to another embodiment of the present invention.

Step 501: A user terminal of user A sends a key request message to a trusted server.

Step 502: The trusted server returns shared key 1 and shared key 2 to the user terminal according to the key request message.

The trusted server may be configured to deliver shared keys to different user terminals. Therefore, after a shared key is delivered to each user terminal, a correspondence among a user identifier, a first shared key, and a second shared key may be saved.

Step 503: The user terminal of user A extracts, from a to-be-uploaded file, digest information of the file and divides the digest information into privacy information and non-privacy information.

Step 504: The user terminal of user A encrypts, by using shared key 1, the to-be-uploaded file to obtain an encrypted file, and encrypts, by using shared key 2, the privacy information to obtain encrypted privacy information.

In this embodiment of the present invention, a file is formed by file content and digest information. Therefore, the user terminal of user A may encrypt the file by using shared key 1, and may also encrypt the file content by using shared key 1.

Step 505: The user terminal of user A uploads the encrypted file, the encrypted privacy information, and the non-privacy information to a cloud server.

Step 506: The cloud server saves a correspondence among the received encrypted file, encrypted privacy information, and non-privacy information and user identifier A.

Step 507: The cloud server returns, to the user terminal of user A, a URL at which the encrypted file is saved.

Step 508: The user terminal transmits the URL of the encrypted file to the trusted server.

Step 509: The trusted server saves a correspondence between the received URL and user identifier A.

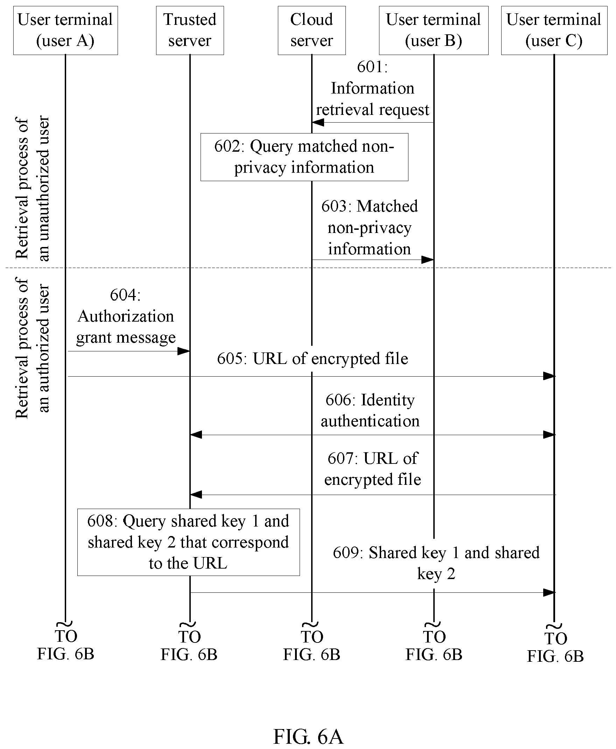

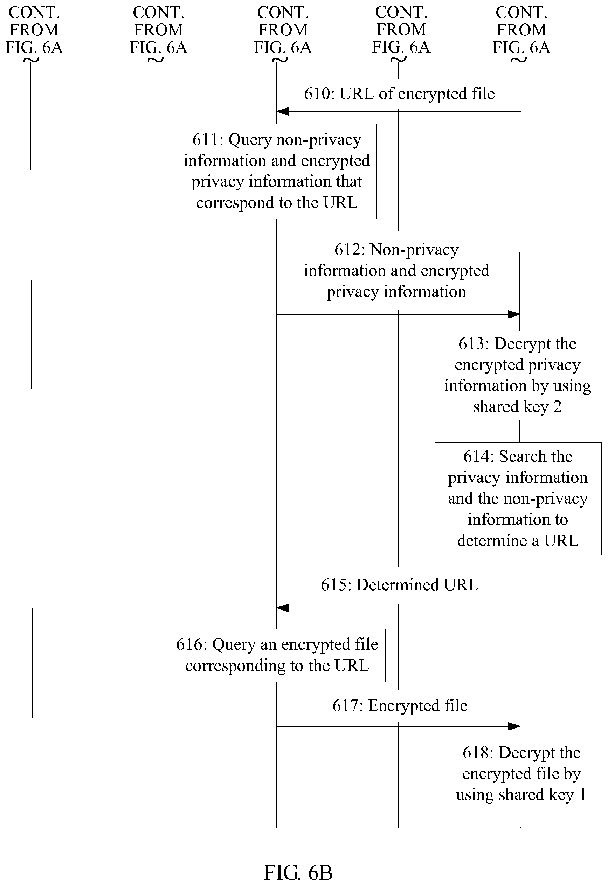

Referring to FIG. 6, FIG. 6 is a flowchart of an information retrieval method according to another embodiment of the present invention. Based on the information obtained in the information processing embodiment shown in FIG. 5, this embodiment separately implements an information retrieval process of an authorized user and an information retrieval process of an unauthorized user.

The following steps 601 to 603 describe an information retrieval process of an unauthorized user:
Step 601: Unauthorized user B sends an information retrieval request to a cloud server by using a user terminal.

The information retrieval request may include a retrieval condition that is used for information matching.

Step 602: The cloud server queries saved non-privacy information of users according to the information retrieval request.

Step 603: The cloud server returns non-privacy information meeting the information retrieval request to the user terminal of user B.

In this embodiment of the present invention, because an unauthorized user may search only non-privacy information, saved in the cloud server, of a user, some retrieval services may be provided while security and privacy of a user file are ensured.

The following steps 604 to 617 describe an information retrieval process of an authorized user:
Step 604: A user terminal of user A sends an authorization grant message to a trusted server, where the authorization grant message grants user C permission to access an encrypted file, stored in a cloud server, of user A.
Step 605: The user terminal of user A sends a URL of the encrypted file to a user terminal of user C.
Step 606: The user terminal of user C completes identity authentication with the trusted server by using a certificate of user C.

In addition to the user-certificate-based authentication manner, one-factor-based network authentication, or two-factor-based network authentication, or multi-factor-based network authentication may also be used, which is not limited in this embodiment of the present invention.

Step 607: The user terminal of user C sends, to the trusted server, the URL at which the encrypted file is saved.

It should be noted that, optionally, in the aforementioned step 605, the user terminal of user A may not send the URL of the encrypted file to the user terminal of user C, but the trusted server actively sends, after identity authentication between the user terminal of user C and the trusted server is complete, the URL of the encrypted file of the user terminal of user A to the user terminal of user C. The user terminal of user C may have obtained authorization from multiple users. Therefore, when having a need to search a file of the user terminal of user A, the user terminal of user C may send a saved URL of the encrypted file of the user terminal of user A to the trusted server.

Step 608: The trusted server queries a saved correspondence according to the received URL to obtain shared key 1 and shared key 2 that correspond to the URL.

Step 609: The trusted server returns, to the user terminal of user C, shared key 1 and shared key 2 that correspond to the URL.

Step 610: The user terminal of user C sends, to the cloud server, the URL at which the encrypted file is saved.

Step 611: The cloud server queries a saved correspondence according to the received URL to obtain non-privacy information and encrypted privacy information that correspond to the URL.

Step 612: The cloud server returns, to the user terminal of user C, the non-privacy information and the encrypted privacy information that correspond to the URL.

Step 613: The user terminal of user C decrypts the encrypted privacy information by using shared key 2, to obtain privacy information.

In this embodiment, the URL is information about an address used to save the encrypted file of user A. Because each URL corresponds to one encrypted file, accordingly, each URL may correspond to encrypted privacy information, non-privacy information, and a shared key of a saved encrypted file at the same time. Therefore, the user terminal of user C may save a correspondence among encrypted privacy information, shared key 1, shared key 2, and non-privacy information of each encrypted file by using each URL as a keyword. Accordingly, when the encrypted privacy information is decrypted, the encrypted privacy information is decrypted by using shared key 2 that corresponds to the encrypted privacy information.

Step 614: The user terminal of user C searches the privacy information and the non-privacy information to obtain a URL corresponding to privacy information and non-privacy information that meet a retrieval condition.

In this embodiment, during retrieval, retrieval is performed according to digest information formed by privacy information and non-privacy information that correspond to a same URL. After digest information meeting a retrieval condition is obtained, a URL corresponding to the digest information is obtained according to a saved correspondence.

In one specific retrieval manner, the user terminal of user C may first use the non-privacy information in the digest information to match a first retrieval condition, and the cloud server returns a first retrieval result, where the first retrieval result includes digest information formed by non-privacy information meeting the first retrieval condition and corresponding privacy information; and then the user terminal of user C uses the privacy information in the digest information in the first retrieval result to match a second retrieval condition, and a second retrieval result is returned, where the second retrieval result includes digest information formed by privacy information and non-privacy information that meet the second retrieval condition. It should be noted that, in an actual matching process, privacy information may also be first matched and then non-privacy information is matched, or non-privacy information and privacy information may be matched at the same time, which is not limited in this embodiment.

Step 615: The user terminal of user C sends the obtained URL to the cloud server.

Step 616: The cloud server queries a correspondence according to the received URL to obtain an encrypted file corresponding to the URL.

Step 617: The cloud server returns the found encrypted file to the user terminal of user C.

Step 618: The user terminal of user C decrypts the encrypted file according to shared key 1 of the encrypted file.

It may be seen from the foregoing embodiment that a trusted server is introduced in an information retrieval process, so that an encrypted file uploaded to a cloud server by a user terminal can be searched by a trusted third-party user terminal. The trusted third-party user terminal may obtain required information from the cloud server by means of retrieval. Therefore, while security of a user file is ensured, performance of the cloud server can be made full use of, and convenience of information sharing on the Internet and flexibility of file sharing between users using the cloud server are improved.

Corresponding to the embodiments of the information processing method and the information retrieval method of the present invention, the present invention further provides embodiments of a user terminal, a cloud server, and a trusted server.

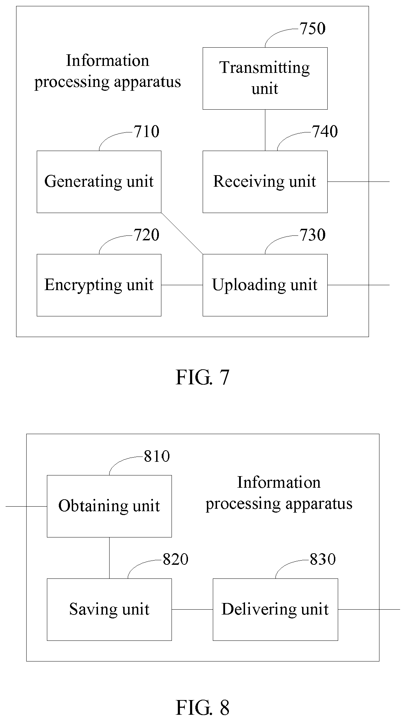

Referring to FIG. 7, FIG. 7 is a block diagram of an information processing apparatus according to one embodiment of the present invention. The information processing apparatus may be disposed in a user terminal.

The information processing apparatus includes: a generating unit 710, an encrypting unit 720, an uploading unit 730, a receiving unit 740, and a transmitting unit 750, where
the generating unit 710 is configured to generate privacy information and non-privacy information according to digest information of a file;
the encrypting unit 720 is configured to encrypt the file by using a shared key delivered by a trusted server, to obtain an encrypted file;
the uploading unit 730 is configured to upload the encrypted file and the non-privacy information to a cloud server;
the receiving unit 740 is configured to receive information, returned by the cloud server, about an address at which the encrypted file is saved; and the transmitting unit 750 is configured to transmit the address information of the encrypted file to the trusted server, so that the trusted server saves the address information.

In one specific implementation manner,
the transmitting unit 750 is further configured to transmit the privacy information to the trusted server, so that the trusted server saves a correspondence between the privacy information and the address information.

In another specific implementation manner,
the encrypting unit 720 is specifically configured to encrypt the file by using a first shared key delivered by the trusted server, to obtain the encrypted file;
the encrypting unit 720 is further configured to encrypt the privacy information by using a second shared key delivered by the trusted server, to obtain encrypted privacy information; and
the uploading unit 730 is further configured to upload the encrypted privacy information to the cloud server.

Referring to FIG. 8, FIG. 8 is a block diagram of an information processing apparatus according to another embodiment of the present invention. The information processing apparatus may be disposed in a cloud server.

The information processing apparatus includes: an obtaining unit 810, a saving unit 820, and a delivering unit 830, where
the obtaining unit 810 is configured to obtain an encrypted file and non-privacy information that are uploaded by a user terminal, where the encrypted file is an encrypted file obtained after the user terminal encrypts a file by using a shared key delivered by a trusted server, and the non-privacy information is non-privacy information generated by the user terminal according to digest information of the file;
the saving unit 820 is configured to save a correspondence between the encrypted file and the non-privacy information; and
the delivering unit 830 is configured to deliver, to the user terminal, information about an address at which the encrypted file is saved, so that the trusted server saves the address information after the user terminal transmits the address information of the encrypted file to the trusted server.

In one specific implementation manner,
the encrypted file acquired by the obtaining unit 810 is specifically an encrypted file obtained after the user terminal encrypts the file by using a first shared key delivered by the trusted server; and
the obtaining unit 810 is further configured to obtain encrypted privacy information uploaded by the user terminal, where the encrypted privacy information is encrypted privacy information obtained after the user terminal encrypts privacy information by using a second shared key delivered by the trusted server, where the privacy information is privacy information generated by the user terminal according to the digest information of the file.

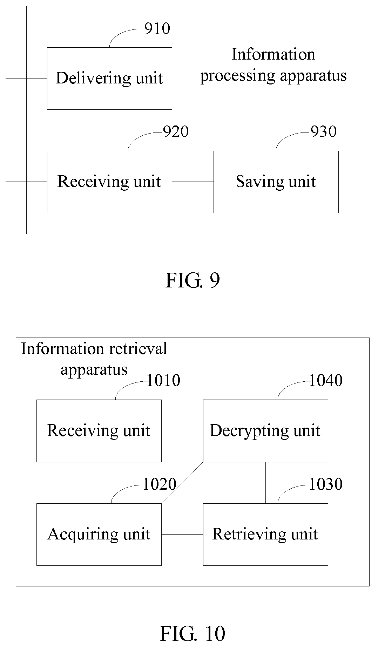

Referring to FIG. 9, FIG. 9 is a block diagram of an information processing apparatus according to another embodiment of the present invention. The information processing apparatus may be disposed in a trusted server.

The information processing apparatus includes: a delivering unit 910, a receiving unit 920, and a saving unit 930, where
the delivering unit 910 is configured to deliver a shared key to a user terminal, so that the user terminal uploads, to a cloud server after obtaining an encrypted file by encrypting a file according to the shared key, the encrypted file and non-privacy information that is generated according to digest information of the file;
the receiving unit 920 is configured to receive address information, sent by the user terminal, of the encrypted file, where the address information is information, returned by the cloud server to the user terminal, about an address at which the encrypted file is saved; and
the saving unit 930 is configured to save the address information.

In one specific implementation manner,
the receiving unit 920 may be further configured to receive privacy information that is generated according to the digest information of the file and transmitted by the user terminal; and
the saving unit 930 may be further configured to save a correspondence between the privacy information and the address information.

In another specific implementation manner,
the delivering unit 910 may be specifically configured to deliver a first shared key to the user terminal, so that the user terminal uploads, to the cloud server after obtaining the encrypted file by encrypting the file according to the first shared key, the encrypted file and the non-privacy information that is generated according to the digest information of the file; and
the delivering unit 910 may be further configured to deliver a second shared key to the user terminal, so that the user terminal encrypts, according to the second shared key, privacy information that is generated according to the digest information of the file to obtain encrypted privacy information and uploads the encrypted privacy information to the cloud server.

Referring to FIG. 10, FIG. 10 is a block diagram of an information retrieval apparatus according to one embodiment of the present invention. The information retrieval apparatus may be disposed at a first user terminal side.

The information retrieval apparatus includes: a receiving unit 1010, an acquiring unit 1020, a retrieving unit 1030, and a decrypting unit 1040, where
the receiving unit 1010 is configured to receive information, sent by a second user terminal, about an address used to save an encrypted file of the second user terminal, where the address information is information, delivered to the second user terminal by the cloud server after the cloud server obtains the encrypted file and non-privacy information that are uploaded by the second user terminal, about an address at which the encrypted file is saved, where the encrypted file is an encrypted file obtained after the second user terminal encrypts a file according to a shared key delivered by a trusted server, and the non-privacy information is generated by the second user terminal according to digest information of the file;
the acquiring unit 1020 is configured to acquire, from the cloud server and the trusted server, the non-privacy information, privacy information, and the shared key that correspond to the address information, where the privacy information is generated by the second user terminal according to the digest information of the file;
the retrieving unit 1030 is configured to obtain address information of a to-be-accessed file by searching the privacy information and the non-privacy information;
the acquiring unit 1020 is further configured to acquire, from the cloud server, a first encrypted file corresponding to the address information of the to-be-accessed file; and
the decrypting unit 1040 is configured to decrypt the first encrypted file by using the shared key, to obtain the to-be-accessed file.

In a first specific implementation manner,
the acquiring unit 1020 may include (not shown in FIG. 10):
a first address sending subunit, configured to send, to the trusted server, the information about the address used to save the encrypted file of the second user terminal; and
a first information receiving subunit, configured to receive the privacy information and the shared key that correspond to the address information and are returned by the trusted server, where
the first address sending subunit is further configured to send, to the cloud server, the information about the address used to save the encrypted file of the second user terminal; and
the first information receiving subunit is further configured to receive the non-privacy information that corresponds to the address information and is returned by the cloud server.

In a second specific implementation manner,
the acquiring unit 1020 may include (not shown in FIG. 10):
a second address sending subunit, configured to send, to the trusted server, the information about the address used to save the encrypted file of the second user terminal;
a second information receiving subunit, configured to receive a first shared key and a second shared key that correspond to the address information and are returned by the trusted server, where
the second address sending subunit is further configured to send, to the cloud server, the information about the address used to save the encrypted file of the second user terminal; and
the second information receiving subunit is further configured to receive the non-privacy information and encrypted privacy information that correspond to the address information and are returned by the cloud server; and
a second information decrypting subunit, configured to decrypt the encrypted privacy information by using the second shared key, to obtain the privacy information, where
the decrypting unit 1040 may be specifically configured to decrypt the first encrypted file by using the first shared key, to obtain the to-be-accessed file.

In a third specific implementation manner,
the acquiring unit 1020 may include (not shown in FIG. 10):
a third address sending subunit, configured to send the address information of the to-be-accessed file to the cloud server; and
a third file receiving subunit, configured to receive the first encrypted file that corresponds to the address information of the to-be-accessed file and is sent by the cloud server after the cloud server queries a saved correspondence between the address information and the encrypted file.

In a fourth specific implementation manner,
the retrieving unit 1030 may include (not shown in FIG. 10):
an information matching subunit, configured to match privacy information and non-privacy information that correspond to each piece of address information with a retrieval condition;
a result obtaining subunit, configured to obtain, according to a matching result, privacy information and non-privacy information that meet the retrieval condition; and
an address determining subunit, configured to determine address information corresponding to the privacy information and the non-privacy information that meet the retrieval condition as the address information of the to-be-accessed file.

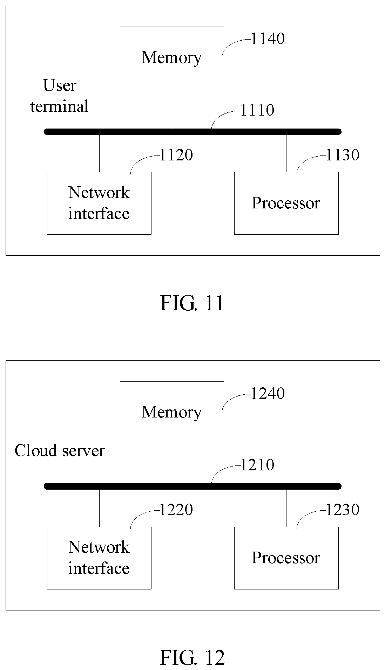

Referring to FIG. 11, FIG. 11 is a block diagram of a user terminal according to one embodiment of the present invention. The user terminal is a terminal having an information processing function.

The terminal includes: a bus 1110, and a network interface 1120, a processor 1130, and a memory 1140 that are connected by using the bus 1110, where
the network interface 1120 is configured to form a network connection with a trusted server and a cloud server;
the processor 1130 is configured to: generate privacy information and non-privacy information according to digest information of a file; encrypt the file by using a shared key delivered by the trusted server, to obtain an encrypted file; through the network interface 1120, upload the encrypted file and the non-privacy information to the cloud server and receive information, returned by the cloud server, about an address at which the encrypted file is saved; and transmit the address information of the encrypted file to the trusted server through the network interface 1120, so that the trusted server saves the address information of the encrypted file; and
the memory 1140 is configured to save the address information of the encrypted file.

In one specific implementation manner, the processor 1130 may further transmit the privacy information to the trusted server through the network interface 1120, so that the trusted server saves a correspondence between the privacy information and the address information.

In another specific implementation manner, the processor 1130 may be further configured to: encrypt the file by using a first shared key delivered by the trusted server, to obtain the encrypted file; and encrypt the privacy information by using a second shared key delivered by the trusted server, to obtain encrypted privacy information; and upload the encrypted privacy information while uploading the encrypted file and the non-privacy information to the cloud server through the network interface 1120.

Referring to FIG. 12, FIG. 12 is a block diagram of a cloud server according to an embodiment of the present invention.

The cloud server includes: a bus 1210, and a network interface 1220, a processor 1230, and a memory 1240 that are connected by using the bus 1210, where
the network interface 1220 is configured to form a network connection with a user terminal;
the processor 1230 is configured to obtain, through the network interface 1220, an encrypted file and non-privacy information that are uploaded by the user terminal, where the encrypted file is an encrypted file obtained after the user terminal encrypts a file by using a shared key delivered by a trusted server, and the non-privacy information is non-privacy information generated by the user terminal according to digest information of the file;
the memory 1240 is configured to save a correspondence between the encrypted file and the non-privacy information; and
the processor 1230 is further configured to deliver, to the user terminal through the network interface 1220, information about an address at which the encrypted file is saved, so that the trusted server saves the address information after the user terminal transmits the address information of the encrypted file to the trusted server.

In one specific implementation manner,
the encrypted file obtained by the processor 1230 through the network interface and uploaded by the user terminal is specifically an encrypted file obtained after the user terminal encrypts the file by using a first shared key delivered by the trusted server; and
the processor 1230 may be further configured to obtain, while obtaining, through the network interface, the encrypted file and the non-privacy information that are uploaded by the user terminal, encrypted privacy information uploaded by the user terminal, where the encrypted privacy information is encrypted privacy information obtained after the user terminal encrypts privacy information by using a second shared key delivered by the trusted server, where the privacy information is privacy information generated by the user terminal according to the digest information of the file.

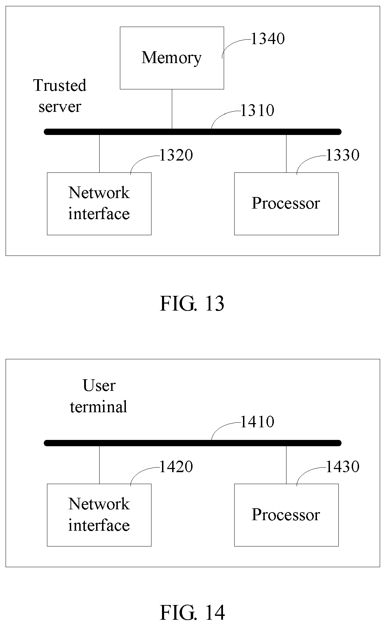

Referring to FIG. 13, FIG. 13 is a block diagram of a trusted server according to an embodiment of the present invention.

The trusted server includes: a bus 1310, and a network interface 1320, a processor 1330, and a memory 1340 that are connected by using the bus 1310, where
the network interface 1320 is configured to form a network connection with a user terminal;
the processor 1330 is configured: to deliver a shared key to the user terminal through the network interface 1320, so that the user terminal uploads, to a cloud server after obtaining an encrypted file by encrypting a file according to the shared key, the encrypted file and non-privacy information that is generated according to digest information of the file; and receive, through the network interface 1320, address information, sent by the user terminal, of the encrypted file, where the address information is information, returned by the cloud server to the user terminal, about an address at which the encrypted file is saved; and
the memory 1340 is configured to save the address information.

In one specific implementation manner,
the processor 1330 may be further configured to receive, through the network interface 1320, privacy information generated according to the digest information of the file and transmitted by the user terminal; and
the memory 1340 may be further configured to save a correspondence between the privacy information and the address information.

In another specific implementation manner,
the processor 1330 may be specifically configured to deliver a first shared key to the user terminal through the network interface 1320, so that the user terminal uploads, to the cloud server after obtaining the encrypted file by encrypting the file according to the first shared key, the encrypted file and the non-privacy information that is generated according to the digest information of the file; and
the processor 1330 may be further configured to deliver a second shared key to the user terminal through the network interface 1320, so that the user terminal encrypts, according to the second shared key, privacy information that is generated according to the digest information of the file to obtain encrypted privacy information and uploads the encrypted privacy information to the cloud server.

Referring to FIG. 14, FIG. 14 is a block diagram of a user terminal according to another embodiment of the present invention. The user terminal may be used as a first user terminal. When the user terminal shown in FIG. 11 is a second user terminal, the first user terminal may be used as a third-party user terminal authorized by the second user terminal to search information of the second user terminal.

The user terminal includes: a bus 1410, and a network interface 1420 and a processor 1430 that are connected by using the bus 1410, where
the network interface 1420 is configured to form a network connection with a second user terminal, a cloud server, and a trusted server; and
the processor 1430 is configured to: receive information, sent by the second user terminal, about an address used to save an encrypted file of the second user terminal, where the address information is information, delivered to the second user terminal by the cloud server after the cloud server obtains the encrypted file and non-privacy information that are uploaded by the second user terminal, about an address at which the encrypted file is saved, where the encrypted file is an encrypted file obtained after the second user terminal encrypts a file according to a shared key delivered by the trusted server, and the non-privacy information is generated by the second user terminal according to digest information of the file; acquire, from the cloud server and the trusted server through the network interface 1420, the non-privacy information, privacy information, and the shared key that correspond to the address information, where the privacy information is generated by the second user terminal according to the digest information of the file; obtain address information of a to-be-accessed file by searching the privacy information and the non-privacy information; acquire, from the cloud server through the network interface 1420, a first encrypted file corresponding to the address information of the to-be-accessed file; and decrypt the first encrypted file by using the shared key, to obtain the to-be-accessed file.

In a first specific implementation manner, the processor 1430 may be specifically configured to: through the network interface 1420, send, to the trusted server, the information about the address used to save the encrypted file of the second user terminal, and receive the privacy information and the shared key that correspond to the address information and are returned by the trusted server; and through the network interface 1420, send, to the cloud server, the information about the address used to save the encrypted file of the second user terminal, and receive the non-privacy information that corresponds to the address information and is returned by the cloud server.

In a second specific implementation manner, the processor 1430 may be specifically configured to: through the network interface 1420, send, to the trusted server, the information about the address used to save the encrypted file of the second user terminal; receive a first shared key and a second shared key that correspond to the address information and are returned by the trusted server; send, to the cloud server, the information about the address used to save the encrypted file of the second user terminal; receive the non-privacy information and encrypted privacy information that correspond to the address information and are returned by the cloud server; and decrypt the encrypted privacy information by using the second shared key, to obtain the privacy information, and decrypt the first encrypted file by using the first shared key, to obtain the to-be-accessed file.

In a third specific implementation manner, the processor 1430 may be specifically configured to: separately match privacy information and non-privacy information that correspond to each piece of address information with a retrieval condition; obtain, according to a matching result, privacy information and non-privacy information that meet the retrieval condition; and determine address information corresponding to the privacy information and the non-privacy information that meet the retrieval condition as the address information of the to-be-accessed file.

In a fourth specific implementation manner, the processor 1430 may be specifically configured to, through the network interface 1420, send the address information of the to-be-accessed file to the cloud server and receive the first encrypted file that corresponds to the address information of the to-be-accessed file and is sent by the cloud server after the cloud server queries a saved correspondence between the address information and the encrypted file.

It may be seen from the foregoing embodiments that, during information processing, a user terminal generates privacy information and non-privacy information according to digest information of a file; encrypts the file by using a shared key delivered by a trusted server, to obtain an encrypted file; uploads the encrypted file and the non-privacy information to a cloud server; receives information, returned by the cloud server, about an address at which the encrypted file is saved; and transmits the address information of the encrypted file to the trusted server, so that the trusted server saves the address information of the encrypted file. By applying the embodiments of the present invention, a cloud server saves an encrypted file and non-privacy information, and a trusted server saves address information of the encrypted file. Therefore, no third-party user terminal can directly obtain privacy information from the cloud server, but only a trusted third-party user terminal can obtain the address information of the encrypted file from the trusted server and access the privacy information according to the address information, so that the trusted third-party user terminal can search the privacy information and the non-privacy information, which enables the trusted third-party user terminal to access the encrypted file while ensuring security of the user file. During information retrieval, a first user terminal receives information, sent by a second user terminal, about an address used to save an encrypted file of the second user terminal; acquires, from a cloud server and a trusted server, privacy information, non-privacy information, and a shared key that correspond to the address information; obtains address information of a to-be-accessed file by searching the privacy information and the non-privacy information; acquires, from the cloud server, a first encrypted file corresponding to the address information of the to-be-accessed file; and decrypts the first encrypted file by using the shared key, to obtain the to-be-accessed file. By applying the embodiments of the present invention, a trusted server is introduced in an information retrieval process, so that an encrypted file uploaded to a cloud server by a user terminal can be searched by a trusted third-party user terminal. The trusted third-party user terminal may obtain required information from the cloud server by means of retrieval. Therefore, while security of a user file is ensured, performance of the cloud server can be made full use of, and convenience of information sharing on the Internet and flexibility of file sharing between users using the cloud server are improved.

A person skilled in the art may clearly understand that, the technique in the embodiments of the present invention may be implemented through software and a necessary general hardware platform. Based on such an understanding, the technical solutions of the present invention essentially or the part contributing to the prior art may be implemented in a form of a software product. The software product may be stored in a storage medium, such as a ROM/RAM, a hard disk, or an optical disc, and includes several instructions for instructing a computer device (which may be a personal computer, a server, or a network device) to perform the methods described in the embodiments or some parts of the embodiments of the present invention.

The embodiments in this specification are all described in a progressive manner, for same or similar parts in the embodiments, reference may be made to these embodiments, and each embodiment focuses on a difference from other embodiments. Especially, a system embodiment is basically similar to a method embodiment, and therefore is described briefly; for related parts, reference may be made to partial descriptions in the method embodiment.

The foregoing descriptions are implementation manners of the present invention, but are not intended to limit the protection scope of the present invention. Any modification, equivalent replacement, and improvement made without departing from the principle of the present invention shall fall within the protection scope of the present invention.

## Claims

1. An information processing apparatus, wherein the information processing apparatus comprises:
a generating unit, configured to generate privacy information and non-privacy information according to digest information of a file;
an encrypting unit, configured to encrypt the file by using a shared key delivered by a trusted server, to obtain an encrypted file;
an uploading unit, configured to upload the encrypted file and the non-privacy information to a cloud server;
a receiving unit, configured to receive information, returned by the cloud server to the information processing apparatus, about an address at which the encrypted file is saved; and
a transmitting unit, configured to transmit the address information of the encrypted file to the trusted server, so that the trusted server saves the address information.

2. The information processing apparatus according to claim 1, wherein:
the transmitting unit is further configured to transmit the privacy information to the trusted server, so that the trusted server saves a correspondence between the privacy information and the address information.

3. The information processing apparatus according to claim 1, wherein:
the encrypting unit is specifically configured to encrypt the file by using a first shared key delivered by the trusted server, to obtain the encrypted file;
the encrypting unit is further configured to encrypt the privacy information by using a second shared key delivered by the trusted server, to obtain encrypted privacy information; and
the uploading unit is further configured to upload the encrypted privacy information to the cloud server.

4. An information processing apparatus, wherein the information processing apparatus comprises:
an obtaining unit, configured to obtain an encrypted file and non-privacy information that are uploaded by a user terminal, wherein the encrypted file is the encrypted file obtained after the user terminal encrypts a file by using a shared key delivered by a trusted server, and the non-privacy information is the non-privacy information generated by the user terminal according to digest information of the file;
a saving unit, configured to save a correspondence between the encrypted file and the non-privacy information; and
a delivering unit, configured to deliver, to the user terminal, information about an address at which the encrypted file is saved, so that the trusted server saves the address information after the user terminal transmits the address information of the encrypted file to the trusted server.

5. The information processing apparatus according to claim 4, wherein the encrypted file acquired by the obtaining unit is specifically the encrypted file obtained after the user terminal encrypts the file by using a first shared key delivered by the trusted server; and
the obtaining unit is further configured to obtain encrypted privacy information uploaded by the user terminal, wherein the encrypted privacy information is the encrypted privacy information obtained after the user terminal encrypts privacy information by using a second shared key delivered by the trusted server, wherein the privacy information is the privacy information generated by the user terminal according to the digest information of the file.

6. A system comprising a cloud server and an information processing apparatus, wherein the information processing apparatus comprises:
a delivering unit, configured to deliver a shared key to a user terminal, so that the user terminal uploads, to the cloud server after obtaining an encrypted file by encrypting a file according to the shared key, the encrypted file and non-privacy information that is generated according to digest information of the file;
a receiving unit, configured to receive address information, sent by the user terminal, of the encrypted file, wherein the address information is information, returned by the cloud server to the user terminal, about an address at which the encrypted file is saved; and
a saving unit, configured to save the address information.

7. The system according to claim 6, wherein:
the receiving unit is further configured to receive privacy information that is generated according to the digest information of the file and transmitted by the user terminal; and
the saving unit is further configured to save a correspondence between the privacy information and the address information.

8. The system according to claim 6, wherein:
the delivering unit is specifically configured to deliver a first shared key to the user terminal, so that the user terminal uploads, to the cloud server after obtaining the encrypted file by encrypting the file according to the first shared key, the encrypted file and the non-privacy information that is generated according to the digest information of the file; and
the delivering unit is further configured to deliver a second shared key to the user terminal, so that the user terminal encrypts, according to the second shared key, privacy information that is generated according to the digest information of the file to obtain encrypted privacy information and uploads the encrypted privacy information to the cloud server.

9. An information processing apparatus, wherein the information processing apparatus comprises:
a receiving unit, configured to receive information, sent by a second user terminal, about an address used to save an encrypted file of the second user terminal, wherein the address information is information, delivered to the second user terminal by the cloud server after the cloud server obtains the encrypted file and non-privacy information that are uploaded by the second user terminal, about an address at which the encrypted file is saved, wherein the encrypted file is an encrypted file obtained after the second user terminal encrypts a file according to a shared key delivered by a trusted server, and the non-privacy information is generated by the second user terminal according to digest information of the file;
an acquiring unit, configured to acquire, from the cloud server and the trusted server, the non-privacy information, privacy information, and the shared key that correspond to the address information, wherein the acquiring unit is configured to acquire the non-privacy information from the cloud server, wherein the privacy information is generated by the second user terminal according to the digest information of the file;
a retrieving unit, configured to obtain address information of a to-be-accessed file by searching the privacy information and the non-privacy information, wherein
the acquiring unit is further configured to acquire, from the cloud server, a first encrypted file corresponding to the address information of the to-be-accessed file; and
a decrypting unit, configured to decrypt the first encrypted file by using the shared key, to obtain the to-be-accessed file.

10. The information processing apparatus according to claim 9, wherein the acquiring unit comprises:
a first address sending subunit, configured to send, to the trusted server, the information about the address used to save the encrypted file of the second user terminal; and
a first information receiving subunit, configured to receive the privacy information and the shared key that correspond to the address information and are returned by the trusted server, wherein
the first address sending subunit is further configured to send, to the cloud server, the information about the address used to save the encrypted file of the second user terminal; and
the first information receiving subunit is further configured to receive the non-privacy information that corresponds to the address information and is returned by the cloud server.

11. The information processing apparatus according to claim 9, wherein the acquiring unit comprises:
a second address sending subunit, configured to send, to the trusted server, the information about the address used to save the encrypted file of the second user terminal;
a second information receiving subunit, configured to receive a first shared key and a second shared key that correspond to the address information and are returned by the trusted server, wherein
the second address sending subunit is further configured to send, to the cloud server, the information about the address used to save the encrypted file of the second user terminal; and
the second information receiving subunit is further configured to receive the non-privacy information and encrypted privacy information that correspond to the address information and are returned by the cloud server; and
a second information decrypting subunit, configured to decrypt the encrypted privacy information by using the second shared key, to obtain the privacy information, wherein
the decrypting unit is specifically configured to decrypt the first encrypted file by using the first shared key, to obtain the to-be-accessed file.

12. The information processing apparatus according to any one of claims 9 to 11, wherein the retrieving unit comprises:
an information matching subunit, configured to match privacy information and non-privacy information that correspond to each piece of address information with a retrieval condition;
a result obtaining subunit, configured to obtain, according to a matching result, privacy information and non-privacy information that meet the retrieval condition; and
an address determining subunit, configured to determine address information corresponding to the privacy information and the non-privacy information that meet the retrieval condition as the address information of the to-be-accessed file.

13. The information processing apparatus according to any one of claims 9 to 12, wherein the acquiring unit comprises:
a third address sending subunit, configured to send the address information of the to-be-accessed file to the cloud server; and
a third file receiving subunit, configured to receive the first encrypted file that corresponds to the address information of the to-be-accessed file and is sent by the cloud server after the cloud server queries a saved correspondence between the address information and the encrypted file.

## Patentansprüche

1. Informationsverarbeitungsvorrichtung, wobei die Informationsverarbeitungsvorrichtung umfasst:
eine Erzeugungseinheit, die dafür ausgelegt ist, Datenschutzinformationen und Nicht-Datenschutz-Informationen gemäß "Digest"-Informationen einer Datei zu erzeugen;
eine Verschlüsselungseinheit, die dafür ausgelegt ist, die Datei unter Verwendung eines von einem "Trusted Server" gelieferten gemeinsamen Schlüssels zu verschlüsseln, um eine verschlüsselte Datei zu gewinnen;
eine Hochladeeinheit, die dafür ausgelegt ist, die verschlüsselte Datei und die Nicht-Datenschutz-Informationen auf einen "Cloud-Server" hochzuladen;
eine Empfangseinheit, die dafür ausgelegt ist, Informationen, die von dem "Cloud-Server" an die Informationsverarbeitungsvorrichtung zurückgesendet wurden, über eine Adresse, unter der die verschlüsselte Datei gespeichert ist, zu empfangen; und
eine Sendeeinheit, die dafür ausgelegt ist, die Adressinformationen der verschlüsselten Datei an den "Trusted Server" zu senden, so dass der "Trusted Server" die Adressinformationen speichert.

2. Informationsverarbeitungsvorrichtung nach Anspruch 1, wobei:
die Sendeeinheit ferner dafür ausgelegt ist, die Datenschutzinformationen an den "Trusted Server" zu senden, so dass der "Trusted Server" eine Entsprechung zwischen den Datenschutzinformationen und den Adressinformationen speichert.

3. Informationsverarbeitungsvorrichtung nach Anspruch 1, wobei:
die Verschlüsselungseinheit speziell dafür ausgelegt ist, die Datei unter Verwendung eines von dem "Trusted Server" gelieferten ersten gemeinsamen Schlüssels zu verschlüsseln, um die verschlüsselte Datei zu gewinnen;
die Verschlüsselungseinheit ferner dafür ausgelegt ist, die Datenschutzinformationen unter Verwendung eines von dem "Trusted Server" gelieferten zweiten gemeinsamen Schlüssels zu verschlüsseln, um verschlüsselte Datenschutzinformationen zu gewinnen; und
die Hochladeeinheit ferner dafür ausgelegt ist, die verschlüsselten Datenschutzinformationen auf den "Cloud-Server" hochzuladen.

4. Informationsverarbeitungsvorrichtung, wobei die Informationsverarbeitungsvorrichtung umfasst:
eine Gewinnungseinheit, die dafür ausgelegt ist, eine verschlüsselte Datei und Nicht-Datenschutz-Informationen, welche durch ein Benutzerendgerät hochgeladen werden, zu gewinnen, wobei die verschlüsselte Datei die verschlüsselte Datei ist, die gewonnen wird, nachdem das Benutzerendgerät eine Datei unter Verwendung eines von einem "Trusted Server" gelieferten gemeinsamen Schlüssels verschlüsselt hat, und die Nicht-Datenschutz-Informationen die Nicht-Datenschutz-Informationen sind, die von dem Benutzerendgerät gemäß "Digest"-Informationen der Datei erzeugt wurden;
eine Speichereinheit, die dafür ausgelegt ist, eine Entsprechung zwischen der verschlüsselten Datei und den Nicht-Datenschutz-Informationen zu speichern; und
eine Liefereinheit, die dafür ausgelegt ist, dem Benutzerendgerät Informationen über eine Adresse zu liefern, unter der die verschlüsselte Datei gespeichert ist, so dass der "Trusted Server" die Adressinformationen speichert, nachdem das Benutzerendgerät die Adressinformationen der verschlüsselten Datei an den "Trusted Server" gesendet hat.

5. Informationsverarbeitungsvorrichtung nach Anspruch 4, wobei die verschlüsselte Datei, die durch die Gewinnungseinheit erfasst wird, speziell die verschlüsselte Datei ist, die gewonnen wird, nachdem das Benutzerendgerät die Datei unter Verwendung eines von dem "Trusted Server" gelieferten ersten gemeinsamen Schlüssels verschlüsselt hat; und
die Gewinnungseinheit ferner dafür ausgelegt ist, verschlüsselte Datenschutzinformationen zu gewinnen, die durch das Benutzerendgerät hochgeladen werden, wobei die verschlüsselten Datenschutzinformationen die verschlüsselten Datenschutzinformationen sind, die gewonnen werden, nachdem das Benutzerendgerät Datenschutzinformationen unter Verwendung eines von dem "Trusted Server" gelieferten zweiten gemeinsamen Schlüssels verschlüsselt hat, wobei die Datenschutzinformationen die Datenschutzinformationen sind, die von dem Benutzerendgerät gemäß den "Digest"-Informationen der Datei erzeugt wurden.

6. System, welches einen "Cloud-Server" und eine Informationsverarbeitungsvorrichtung umfasst, wobei die Informationsverarbeitungsvorrichtung umfasst:
eine Liefereinheit, die dafür ausgelegt ist, einem Benutzerendgerät einen gemeinsamen Schlüssel zu liefern, so dass das Benutzerendgerät, nach dem Gewinnen einer verschlüsselten Datei durch Verschlüsseln einer Datei gemäß dem gemeinsamen Schlüssel, die verschlüsselte Datei und Nicht-Datenschutz-Informationen, welche gemäß "Digest"-Informationen der Datei erzeugt werden, auf den "Cloud-Server" hochlädt;
eine Empfangseinheit, die dafür ausgelegt ist, durch das Benutzerendgerät gesendete Adressinformationen der verschlüsselten Datei zu empfangen, wobei die Adressinformationen von dem "Cloud-Server" an das Benutzerendgerät zurückgesendete Informationen über eine Adresse sind, unter welcher die verschlüsselte Datei gespeichert ist; und
eine Speichereinheit, die dafür ausgelegt ist, die Adressinformationen zu speichern.

7. System nach Anspruch 6, wobei:
die Empfangseinheit ferner dafür ausgelegt ist, Datenschutzinformationen zu empfangen, welche von dem Benutzerendgerät gemäß den "Digest"-Informationen der Datei erzeugt und gesendet werden; und
die Speichereinheit ferner dafür ausgelegt ist, eine Entsprechung zwischen den Datenschutzinformationen und den Adressinformationen zu speichern.

8. System nach Anspruch 6, wobei:
die Liefereinheit speziell dafür ausgelegt ist, dem Benutzerendgerät einen ersten gemeinsamen Schlüssel zu liefern, so dass das Benutzerendgerät, nach dem Gewinnen der verschlüsselten Datei durch Verschlüsseln der Datei gemäß dem ersten gemeinsamen Schlüssel, die verschlüsselte Datei und die Nicht-Datenschutz-Informationen, welche gemäß den "Digest"-Informationen der Datei erzeugt werden, auf den "Cloud-Server" hochlädt; und
die Liefereinheit ferner dafür ausgelegt ist, dem Benutzerendgerät einen zweiten gemeinsamen Schlüssel zu liefern, so dass das Benutzerendgerät gemäß dem zweiten gemeinsamen Schlüssel Datenschutzinformationen verschlüsselt, welche gemäß den "Digest"-Informationen der Datei erzeugt werden, um verschlüsselte Datenschutzinformationen zu gewinnen, und die verschlüsselten Datenschutzinformationen auf den "Cloud-Server" hochlädt.

9. Informationsverarbeitungsvorrichtung, wobei die Informationsverarbeitungsvorrichtung umfasst:
eine Empfangseinheit, die dafür ausgelegt ist, durch ein zweites Benutzerendgerät gesendete Informationen über eine Adresse zu empfangen, die verwendet wird, um eine verschlüsselte Datei des zweiten Benutzerendgerätes zu speichern, wobei die Adressinformationen Informationen über eine Adresse sind, unter welcher die verschlüsselte Datei gespeichert ist, die dem zweiten Benutzerendgerät von dem "Cloud-Server" geliefert werden, nachdem der "Cloud-Server" die verschlüsselte Datei und Nicht-Datenschutz-Informationen erhalten hat, welche durch das zweite Benutzerendgerät hochgeladen werden, wobei die verschlüsselte Datei eine verschlüsselte Datei ist, die gewonnen wird, nachdem das zweite Benutzerendgerät eine Datei gemäß einem von einem "Trusted Server" gelieferten gemeinsamen Schlüssel verschlüsselt hat, und die Nicht-Datenschutz-Informationen von dem zweiten Benutzerendgerät gemäß "Digest"-Informationen der Datei erzeugt werden;
eine Erfassungseinheit, die dafür ausgelegt ist, von dem "Cloud-Server" und dem "Trusted Server" die Nicht-Datenschutz-Informationen, Datenschutzinformationen und den gemeinsamen Schlüssel zu erfassen, welche den Adressinformationen entsprechen, wobei die Erfassungseinheit dafür ausgelegt ist, die Nicht-Datenschutz-Informationen von dem "Cloud-Server" zu erfassen,
wobei die Datenschutzinformationen durch das zweite Benutzerendgerät gemäß den "Digest"-Informationen der Datei erzeugt werden;
eine Abrufeinheit, die dafür ausgelegt ist, Adressinformationen einer Datei, auf die zugegriffen werden soll, durch Durchsuchen der Datenschutzinformationen und der Nicht-Datenschutz-Informationen zu gewinnen, wobei
die Erfassungseinheit ferner dafür ausgelegt ist, von dem "Cloud-Server" eine erste verschlüsselte Datei zu erfassen, die den Adressinformationen der Datei, auf die zugegriffen werden soll, entspricht; und
eine Entschlüsselungseinheit, die dafür ausgelegt ist, die erste verschlüsselte Datei unter Verwendung des gemeinsamen Schlüssels zu entschlüsseln, um die Datei, auf die zugegriffen werden soll, zu gewinnen.

10. Informationsverarbeitungsvorrichtung nach Anspruch 9, wobei die Erfassungseinheit umfasst:
eine erste Adressensende-Untereinheit, die dafür ausgelegt ist, an den "Trusted Server" die Informationen über die Adresse zu senden, die verwendet wird, um die verschlüsselte Datei des zweiten Benutzerendgerätes zu speichern; und
eine erste Informationsempfangs-Untereinheit, die dafür ausgelegt ist, die Datenschutzinformationen und den gemeinsamen Schlüssel zu empfangen, welche den Adressinformationen entsprechen und von dem "Trusted Server" zurückgesendet werden, wobei
die erste Adressensende-Untereinheit ferner dafür ausgelegt ist, an den "Cloud-Server" die Informationen über die Adresse zu senden, die verwendet wird, um die verschlüsselte Datei des zweiten Benutzerendgerätes zu speichern; und
die erste Informationsempfangs-Untereinheit ferner dafür ausgelegt ist, die Nicht-Datenschutz-Informationen zu empfangen, welche den Adressinformationen entsprechen und von dem "Cloud-Server" zurückgesendet werden.

11. Informationsverarbeitungsvorrichtung nach Anspruch 9, wobei die Erfassungseinheit umfasst:
eine zweite Adressensende-Untereinheit, die dafür ausgelegt ist, an den "Trusted Server" die Informationen über die Adresse zu senden, die verwendet wird, um die verschlüsselte Datei des zweiten Benutzerendgerätes zu speichern;
eine zweite Informationsempfangs-Untereinheit, die dafür ausgelegt ist, einen ersten gemeinsamen Schlüssel und einen zweiten gemeinsamen Schlüssel zu empfangen, welche den Adressinformationen entsprechen und von dem "Trusted Server" zurückgesendet werden, wobei
die zweite Adressensende-Untereinheit ferner dafür ausgelegt ist, an den "Cloud-Server" die Informationen über die Adresse zu senden, die verwendet wird, um die verschlüsselte Datei des zweiten Benutzerendgerätes zu speichern; und
die zweite Informationsempfangs-Untereinheit ferner dafür ausgelegt ist, die Nicht-Datenschutz-Informationen und verschlüsselten Datenschutzinformationen zu empfangen, welche den Adressinformationen entsprechen und von dem "Cloud-Server" zurückgesendet werden; und
eine zweite Informationsentschlüsselungs-Untereinheit, die dafür ausgelegt ist, die verschlüsselten Datenschutzinformationen unter Verwendung des zweiten gemeinsamen Schlüssels zu entschlüsseln, um die Datenschutzinformationen zu gewinnen, wobei
die Entschlüsselungseinheit speziell dafür ausgelegt ist, die erste verschlüsselte Datei unter Verwendung des ersten gemeinsamen Schlüssels zu entschlüsseln, um die Datei, auf die zugegriffen werden soll, zu gewinnen.

12. Informationsverarbeitungsvorrichtung nach einem der Ansprüche 9 bis 11, wobei die Abrufeinheit umfasst:
eine Informationsabgleich-Untereinheit, die dafür ausgelegt ist, Datenschutzinformationen und Nicht-Datenschutz-Informationen, welche einer jeweiligen Addressinformation entsprechen, mit einer Abrufbedingung abzugleichen;
eine Ergebnisgewinnungs-Untereinheit, die dafür ausgelegt ist, gemäß einem Abgleichsergebnis Datenschutzinformationen und Nicht-Datenschutz-Informationen zu gewinnen, welche die Abrufbedingung erfüllen; und
eine Adressenbestimmungs-Untereinheit, die dafür ausgelegt ist, Adressinformationen, die den Datenschutzinformationen und den Nicht-Datenschutz-Informationen entsprechen, welche die Abrufbedingung erfüllen, als die Adressinformationen der Datei, auf die zugegriffen werden soll, zu bestimmen.

13. Informationsverarbeitungsvorrichtung nach einem der Ansprüche 9 bis 12, wobei die Erfassungseinheit umfasst:
eine dritte Adressensende-Untereinheit, die dafür ausgelegt ist, die Adressinformationen der Datei, auf die zugegriffen werden soll, an den "Cloud-Server" zu senden; und
eine dritte Dateiempfangs-Untereinheit, die dafür ausgelegt ist, die erste verschlüsselte Datei zu empfangen, welche den Adressinformationen der Datei, auf die zugegriffen werden soll, entspricht und von dem "Cloud-Server" gesendet wird, nachdem der "Cloud-Server" eine gespeicherte Entsprechung zwischen den Adressinformationen und der verschlüsselten Datei abgefragt hat.

## Revendications

1. Appareil de traitement d'informations, dans lequel l'appareil de traitement d'informations comprend :
une unité de génération, configurée pour générer des informations confidentielles et des informations non confidentielles selon des informations de résumé d'un fichier ;
une unité de cryptage, configurée pour crypter le fichier en utilisant une clé partagée délivrée par un serveur digne de confiance, pour obtenir un fichier crypté ;
une unité de téléchargement, configurée pour télécharger le fichier crypté et les informations non confidentielles vers un serveur de type cloud ;
une unité de réception, configurée pour recevoir des informations, retournées par le serveur de type cloud à l'appareil de traitement d'informations, concernant une adresse à laquelle le fichier crypté est sauvegardé ; et
une unité de transmission, configurée pour transmettre les informations d'adresse du fichier crypté au serveur digne de confiance, afin que le serveur digne de confiance sauvegarde les informations d'adresse.

2. Appareil de traitement d'informations selon la revendication 1, dans lequel :
l'unité de transmission est en outre configurée pour transmettre les informations confidentielles au serveur digne de confiance, afin que le serveur digne de confiance sauvegarde une correspondance entre les informations confidentielles et les informations d'adresse.

3. Appareil de traitement d'informations selon la revendication 1, dans lequel :
l'unité de cryptage est configurée spécifiquement pour crypter le fichier en utilisant une première clé partagée délivrée par le serveur digne de confiance, pour obtenir le fichier crypté ;
l'unité de cryptage est en outre configurée pour crypter les informations confidentielles en utilisant une deuxième clé partagée délivrée par le serveur digne de confiance, pour obtenir des informations confidentielles cryptées ; et
l'unité de téléchargement est en outre configurée pour télécharger les informations confidentielles cryptées vers le serveur de type cloud.

4. Appareil de traitement d'informations, dans lequel l'appareil de traitement d'informations comprend :
une unité d'obtention, configurée pour obtenir un fichier crypté et des informations non confidentielles qui sont téléchargés vers un serveur par un terminal utilisateur, le fichier crypté étant le fichier crypté obtenu après que le terminal utilisateur a crypté un fichier en utilisant une clé partagée délivrée par un serveur digne de confiance, et les informations non confidentielles étant les informations non confidentielles générées par le terminal utilisateur selon des informations de résumé du fichier ;
une unité de sauvegarde, configurée pour sauvegarder une correspondance entre le fichier crypté et les informations non confidentielles ; et
une unité de livraison, configurée pour délivrer, au terminal utilisateur, des informations concernant une adresse à laquelle le fichier crypté est sauvegardé, afin que le serveur digne de confiance sauvegarde les informations d'adresse après que le terminal utilisateur a transmis les informations d'adresse du fichier crypté au serveur digne de confiance.

5. Appareil de traitement d'informations selon la revendication 4, dans lequel le fichier crypté acquis par l'unité d'obtention est spécifiquement le fichier crypté obtenu après que le terminal utilisateur a crypté le fichier en utilisant une première clé partagée délivrée par le serveur digne de confiance ; et
l'unité d'obtention est en outre configurée pour obtenir des informations confidentielles cryptées téléchargées vers le serveur par le terminal utilisateur, les informations confidentielles cryptées étant les informations confidentielles cryptées obtenues après que le terminal utilisateur a crypté des informations confidentielles en utilisant une deuxième clé partagée délivrée par le serveur digne de confiance, les informations confidentielles étant les informations confidentielles générées par le terminal utilisateur selon les informations de résumé du fichier.

6. Système comprenant un serveur de type cloud et un appareil de traitement d'informations, dans lequel l'appareil de traitement d'informations comprend :
une unité de livraison, configurée pour délivrer une clé partagée à un terminal utilisateur, afin que le terminal utilisateur télécharge, vers le serveur de type cloud après avoir obtenu un fichier crypté en cryptant un fichier selon la clé partagée, le fichier crypté et des informations non confidentielles qui sont générées selon des informations de résumé du fichier ;
une unité de réception, configurée pour recevoir des informations d'adresse, envoyées par le terminal utilisateur, du fichier crypté, les informations d'adresse étant des informations, retournées par le serveur de type cloud au terminal utilisateur, concernant une adresse à laquelle le fichier crypté est sauvegardé ; et
une unité de sauvegarde, configurée pour sauvegarder les informations d'adresse.

7. Système selon la revendication 6, dans lequel :
l'unité de réception est en outre configurée pour recevoir des informations confidentielles qui sont générées selon les informations de résumé du fichier et transmises par le terminal utilisateur ; et
l'unité de sauvegarde est en outre configurée pour sauvegarder une correspondance entre les informations confidentielles et les informations d'adresse.

8. Système selon la revendication 6, dans lequel :
l'unité de livraison est configurée spécifiquement pour délivrer une première clé partagée au terminal utilisateur, afin que le terminal utilisateur télécharge, vers le serveur de type cloud après avoir obtenu le fichier crypté en cryptant le fichier selon la première clé partagée, le fichier crypté et les informations non confidentielles qui sont générées selon les informations de résumé du fichier ; et
l'unité de livraison est en outre configurée pour délivrer une deuxième clé partagée au terminal utilisateur, afin que le terminal utilisateur crypte, selon la deuxième clé partagée, des informations confidentielles qui sont générées selon les informations de résumé du fichier pour obtenir des informations confidentielles cryptées et télécharge les informations confidentielles cryptées vers le serveur de type cloud.

9. Appareil de traitement d'informations, dans lequel l'appareil de traitement d'informations comprend :
une unité de réception, configurée pour recevoir des informations, envoyées par un deuxième terminal utilisateur, concernant une adresse utilisée pour sauvegarder un fichier crypté du deuxième terminal utilisateur, les informations d'adresse étant des informations, délivrées au deuxième terminal utilisateur par le serveur de type cloud après que le serveur de type cloud a obtenu le fichier crypté et des informations non confidentielles qui sont téléchargés par le deuxième terminal utilisateur, concernant une adresse à laquelle le fichier crypté est sauvegardé, le fichier crypté étant un fichier crypté obtenu après que le deuxième terminal utilisateur a crypté un fichier selon une clé partagée délivrée par un serveur digne de confiance, et les informations non confidentielles étant générées par le deuxième terminal utilisateur selon des informations de résumé du fichier ;
une unité d'acquisition, configurée pour acquérir, à partir du serveur de type cloud et du serveur digne de confiance, les informations non confidentielles, des informations confidentielles, et la clé partagée qui correspondent aux informations d'adresse,
l'unité d'acquisition étant configurée pour acquérir les informations non confidentielles à partir du serveur de type cloud,
les informations confidentielles étant générées par le deuxième terminal utilisateur selon les informations de résumé du fichier ;
une unité de récupération, configurée pour obtenir des informations d'adresse d'un fichier à accéder en recherchant dans les informations confidentielles et les informations non confidentielles,
l'unité d'acquisition étant en outre configurée pour acquérir, à partir du serveur de type cloud, un premier fichier crypté correspondant aux informations d'adresse du fichier à accéder ; et
une unité de décryptage, configurée pour décrypter le premier fichier crypté en utilisant la clé partagée, pour obtenir le fichier à accéder.

10. Appareil de traitement d'informations selon la revendication 9, dans lequel l'unité d'acquisition comprend :
une première sous-unité d'envoi d'adresse, configurée pour envoyer, au serveur digne de confiance, les informations concernant l'adresse utilisée pour sauvegarder le fichier crypté du deuxième terminal utilisateur ; et
une première sous-unité de réception d'informations, configurée pour recevoir les informations confidentielles et la clé partagée qui correspondent aux informations d'adresse et qui sont retournées par le serveur digne de confiance,
la première sous-unité d'envoi d'adresse étant en outre configurée pour envoyer, au serveur de type cloud, les informations concernant l'adresse utilisée pour sauvegarder le fichier crypté du deuxième terminal utilisateur ; et
la première sous-unité de réception d'informations étant en outre configurée pour recevoir les informations non confidentielles qui correspondent aux informations d'adresse et qui sont retournées par le serveur de type cloud.

11. Appareil de traitement d'informations selon la revendication 9, dans lequel l'unité d'acquisition comprend :
une deuxième sous-unité d'envoi d'adresse, configurée pour envoyer, au serveur digne de confiance, les informations concernant l'adresse utilisée pour sauvegarder le fichier crypté du deuxième terminal utilisateur ;
une deuxième sous-unité de réception d'informations, configurée pour recevoir une première clé partagée et une deuxième clé partagée qui correspondent aux informations d'adresse et qui sont retournées par le serveur digne de confiance,
la deuxième sous-unité d'envoi d'adresse étant en outre configurée pour envoyer, au serveur de type cloud, les informations concernant l'adresse utilisée pour sauvegarder le fichier crypté du deuxième terminal utilisateur ; et
la deuxième sous-unité de réception d'informations étant en outre configurée pour recevoir les informations non confidentielles et des informations confidentielles cryptées qui correspondent aux informations d'adresse et qui sont retournées par le serveur de type cloud ; et
une deuxième sous-unité de décryptage d'informations, configurée pour décrypter les informations confidentielles cryptées en utilisant la deuxième clé partagée, pour obtenir les informations confidentielles,
l'unité de décryptage étant configurée spécifiquement pour décrypter le premier fichier crypté en utilisant la première clé partagée, pour obtenir le fichier à accéder.

12. Appareil de traitement d'informations selon l'une quelconque des revendications 9 à 11, dans lequel l'unité de récupération comprend :
une sous-unité d'appariement d'informations, configurée pour apparier des informations confidentielles et des informations non confidentielles qui correspondent à chaque information d'adresse avec une condition de récupération ;
une sous-unité d'obtention de résultat, configurée pour obtenir, selon un résultat d'appariement, des informations confidentielles et des informations non confidentielles qui satisfont la condition de récupération ; et
une sous-unité de détermination d'adresse, configurée pour déterminer des informations d'adresse correspondant aux informations confidentielles et aux informations non confidentielles qui satisfont la condition de récupération comme les informations d'adresse du fichier à accéder.

13. Appareil de traitement d'informations selon l'une quelconque des revendications 9 à 12, dans lequel l'unité d'acquisition comprend :
une troisième sous-unité d'envoi d'adresse, configurée pour envoyer les informations d'adresse du fichier à accéder au serveur de type cloud ; et
une troisième sous-unité de réception de fichier, configurée pour recevoir le premier fichier crypté qui correspond aux informations d'adresse du fichier à accéder et qui est envoyé par le serveur de type cloud après que le serveur de type cloud a demandé une correspondance sauvegardée entre les informations d'adresse et le fichier crypté.
